# EUROPEAN PATENT APPLICATION

(11) **EP 2 442 371 A1**
(43) Date of publication of application: **18.04.2012**
(21) Application number: 11185000.4
(22) Date of filing: 13.10.2011
(51) Int. Cl.: H01L 31/048

(54) **Roofing structure for buildings, in particular houses, blocks and/or dwellings**

(30) Priority: 15.10.2010 IT MI20101893
(71) Applicant: Wegaplast S.p.A., 40060 Dozza (Bologna) (IT)
(72) Inventor: BETTI, Danilo, 40060 DOZZA (BOLOGNA) (IT)
(74) Representative: Ponzellini, Gianmarco

(57) **Abstract**

The present invention relates to a roof structure for buildings, especially houses, buildings and/or dwellings. The structure comprises; at least a connecting element (2) in the form of a profiled member fixable to the bearing structure and provided with a plurality of conductor elements (10), consecutively aligned along the connecting element (2); a plurality of roofing elements (4) in the form of tiles, which are connected to the connecting element (2) and which each bear at least a photovoltaic module (6); in connection with the terminals of the photovoltaic module (6) the conductor elements (10) enable a series electrical connection to be established between two adjacent roofing elements (4) consecutively arranged in rows (13, 14) in a main development direction (3).

## Description

### FIELD OF THE INVENTION.

The present invention relates to a roof structure for buildings, especially houses, blocks and /or homes. The structure is primarily intended for use in the field of construction and is suitable for use on any new or already-existing construction which requires a roof structure in combination with a system for producing electricity via photovoltaic modules. The roof structure of the invention features an innovative electrical connection system between the consecutively-aligned roof elements, which system facilitates installation and laying. Besides this main characteristic, the roof structure is predisposed to enable rapid and reversible mounting which further simplifies installation and facilitates any replacement or repair.

### STATE OF THE ART.

As is known, use of photovoltaic panels to produce electricity from photovoltaic energy conversion is now increasingly widespread. There are various tools and techniques used for energy production with the goal of maximizing performance while taking other design into account, including the environmental and aesthetic impact thereof. In particular roof construction for infrastructures is known, with integrated photovoltaic modules. This solution has enabled improvements to be in the aesthetics of photovoltaic panels and therefore to expand their use, for example in having historic / or cultural interest.

With regard to the wiring of the roof with an integrated photovoltaic module, it is important to an electrical connection between the modules that facilitates maximum overall efficiency of the system while taking into account various influential factors which the efficiency of various interconnected electrical components (photovoltaic modules, inverters, wiring, etc..). In roofing structures which exploit the use of roof tiles provided with integrated photovoltaic modules, it is not easy today to set up a electrical wiring system.

Marseille are arranged in a mutually fashion, and therefore a direct link from the bottom towards the ridge of the roof (the present of the art in roofing tiles with photovoltaic is difficult to achieve during assembly of the tiles, which are identical to one another.

As will be more fully described herein below, the majority of roofing structures with integrated photovoltaic panels have a type of electrical connection between the panels, in parallel, which greatly simplifies the connections and can be obtained directly during installation of the panel. Photovoltaic panels borne by roof tiles are also known, with the use of free wires and connectors terminally borne by the cables which must however be connected manually during the installation of the roof structure, with a consequent increase in the complexity of installation, labour costs (specialized technicians) and laying times.

An example of roofing with photovoltaic modules is described in document DE 10358851 which exhibits photovoltaic tiles composed of a support body and a photovoltaic element associated thereto.

The electrical connection is made via a pair of conductors, spaced and parallel to one another, mounted on the infrastructure. The conductors connect photovoltaic tiles in parallel, aligned in the direction of the conductors. This type of solution requires a phase of installation of the conductor pairs and a subsequent stage of wiring.

Another example, described in document DE 2806810, illustrates photovoltaic panels used to produce energy and to roof buildings at the same time. The panels are formed by a body on which a photovoltaic module is positioned. The installation on infrastructures is done in the same way as with conventional tiles, while as far as the wiring is concerned, a pair of contacts have to be provided on the bearing structure. The contacts are formed substantially by a track consisting of two conductor elements installed on the infrastructure. When mounting the panel on the infrastructure, the terminals of the photovoltaic module come into contact with the conductor elements, establishing an electrical connection in parallel between the panels. This type of solution therefore proposes a parallel connection between the panels aligned in the direction of the supporting structure, which as described above, does not enable optimal performance as far as the transfer of the electricity produced is concerned.

Another solution, described in document DE 4438858, is similar to the previous embodiment. Both cases manifest problems related to the aesthetics of the cover and the electrical connection in parallel.

A subsequent prior art technique, described in document DE 10104297, involves predisposing a bearing panel comprising a conductor track. This conductor track establishes the connection between consecutively aligned panels. The advantage over previously-described solutions is that it is not necessary to intervene in order to make the electrical connections during installation on the infrastructure, as the mechanical connection of the covering elements also involves the electrical connection thereof. In this case too, however, the panels are electrically connected in parallel.

Also known from document US 5990414 is a structure that uses tiles with photovoltaic panels having a body and a photovoltaic panel. The body has a fixing portion which supports the tile, in contact with the rabbet of the infrastructure. The panel contact is borne directly by the fixing portion while the rabbet has a conductor track which connects aligned tiles in parallel. In spite of the fact that mounting is very simple, the step of wiring the panels after installation has not been completely eliminated.

Also known are tiles having photovoltaic modules (reference is made to document DE 19739948), comprising a body and a photovoltaic module and wherein the electric circuit is located internally of the body of the tile, which tile exhibits connection sockets at ends thereof, suitable for coupling with the sockets of the adjacent successively aligned tiles. Thus assembled, the tiles are connected in parallel; for this solution, however, it is necessary to realise two different types of tiles in order to achieve a serial connection. Although this solution has simplified electrical wiring phases, the realisation of an internal circuit board with sockets at the edge of the tile, but especially the management during the production stage and during the stage of installation of two different covering elements to be positioned during installation, realise a solution that is impractical and extremely expensive.

A further known solution relates to photovoltaic roof panels where each cell is provided with a respective connector electrically connected to a terminal connection which exhibits two connector ports. The terminal connection is equipped with switches and is suitable for connection to a corresponding terminal connection of an adjacent panel. The switch enables selective switching from a parallel connection to a series connection.

This solution is novel in comparison to the preceding ones, in that it is possible to switch between one type of connection and the other without having to demount the tile and without having to realise two different types of tiles. However the use of additional electrical components (in particular switches) has a negative impact on the electrical reliability of the cover and further the presence of the terminal connections on the in-view side have a considerable effect on the aesthetic effect of the roof, also contributing to increasing the costs of the whole plant.

Another prior art document (U.S. 2007/0157963) provides a modular system for covering infrastructures comprising the photovoltaic system. The system includes a body on which the photovoltaic module is mounted and a support beam suitably shaped for enabling assembly of the body thereon. The beam can be fixed to the infrastructure and bears a conductor rail that enters into contact with respective profiled conductors of the photovoltaic module. Thanks to the special shape of the body and the beam, the body is able to slide on the beam while electrical contact between the two is maintained. This system is particularly easy to install and only requires a step of mounting as the electrical contact is ensured by the assembling of the body on the beam.

Although this solution is extremely advantageous in terms of mounting and assembly, it exhibits a type of parallel connection which, as already described in the foregoing, exhibits problems of performance with respect to those generated by a series connection.

### SUMMARY.

Despite the numerous technical solutions described in the preceding realisations, it has been shown to be possible to predispose a roofing structure that can solve the drawbacks in the prior art and introduce further improvements.

An aim of the present invention is therefore to obviate one or more of the problems encountered and obviate some of the limitations of the preceding solutions.

A main aim of the invention is to realise a series connection between roofing elements (tiles) adjacent and aligned along a prevalent direction. The connection is guaranteed in particular following assembly of a roofing element bearing a photovoltaic module to a connecting element already fixed to the infrastructure.

An aim of an embodiment described herein below is to guarantee that, once a roofing element is mounted on a connecting element, the contacts of the photovoltaic module come into contact with a series of conductors arranged on the connecting element, establishing an electrical connection between the consecutively-aligned photovoltaic modules.

In addition to an advantageous series connection, very relevant is the complete elimination of the additional phases of wiring between panels arranged on a same row, as the contact is guaranteed on installation of the roofing element.

An auxiliary aim of an embodiment described below is also to enable, thanks to its geometric characteristics, a more stable assembly of the tile to the connecting element with respect to a normal tile and also to fix the adjacent roofing elements such as to create a completely connected structure, thus guaranteeing better adhesion to the infrastructure.

A further aim of an embodiment described herein below is to attempt to maintain the best possible performance of the photovoltaic module with a particular shape of the roofing element, which, in addition to respecting the aesthetic characteristics of the tile, guarantees ventilation and therefore cooling of the module. In this case the module can operate at a temperature that is lower than the other modules as described above, thus reducing the problems related to the raising of the temperature.

In a first embodiment the roof structure for buildings, especially houses, buildings and / or homes, comprises:
at least a connecting element (2) fixable to the infrastructure and having a prevalent development direction (3),
a plurality of roofing elements (4), a fixed number of which are positioned in an alignment direction (5) substantially coinciding with the prevalent development direction (3) of said connecting element (2),
at least a photovoltaic module (6) for each of the roofing elements (4), each photovoltaic module (6) comprising two electrical connectors (7) exhibiting at heads thereof, in use conditions of the photovoltaic module (6), a potential difference, the connectors (7) respectively defining a positive terminal (8) and a negative terminal (9),
a plurality of conductor elements (10) borne by the connecting element (2), characterized in that each conductor element (10) establishes an electrical connection between the positive terminal (8) of a photovoltaic module (6) positioned on a roofing element (4) and a negative terminal (9) of a photovoltaic module (6) positioned on a roofing element (4) consecutively arranged in the alignment direction (5), thus establishing a series electrical connection between the elements.

In an embodiment of the roof structure according to the preceding aspect, each conductor element (10) is configured and positioned relative to the element connection (2) such as to determine a flow of electric current between the positive terminal (8) of a photovoltaic module (6) positioned on a roofing element (4) and a negative terminal (9) of a photovoltaic module (6) positioned on a roofing element (4) and positioned immediately consecutively in the alignment direction (5), said flow of current occurring along a line having a substantially coinciding direction to the alignment direction (5) of the said roofing elements (4).

In an embodiment of the roof structure according to any one of the preceding aspects, a plurality of conductor elements (10), arranged on said connecting elements (2), is substantially aligned in the alignment direction (5) of the said roofing elements (4).

In an embodiment of the roof structure according to any one of the preceding aspects, said conducting elements (10) are defined by elongate bodies arranged consecutively on the connecting element (2) and aligned according to the prevalent direction of development (3), the conductor elements exhibiting a first terminal end (10A) and a second terminal end (10B) distanced from the first terminal end (10A).

In an embodiment of the roof structure according to the preceding aspect, the terminal ends of the conductor element (10) have at least a first portion of free outer surface (11) made of a conductor material suitable for establishing an electrical connection with the connector of the photovoltaic module (6) which defines the positive terminal (8), and at least a second portion of the free outer surface (12) made of a conductor material suitable for establishing an electrical connection with the connector that defines the negative terminal (9) of the photovoltaic module (6) aligned in the prevalent development direction (3).

In an embodiment of the roof structure according to any one of the preceding aspects, the conductor element (10) is constituted by a single wire element, in particular defined by an uninsulated conductor wire.

In an embodiment of the roof structure according to any one of the preceding aspects, the conductor elements (10) have a same section and are in particular lengths having substantially identical extensions.

In an embodiment of the roof structure according to any one of the above aspects, the roofing elements (4) are substantially identical to one another.

In an embodiment of the roof structure according to any one of the above aspects, the connectors of the photovoltaic module (6) are positioned relative to the roofing element (4) in a configuration that is substantially identical for each element of each roofing element (4).

In an embodiment of the roof structure according to any one of the preceding aspects, the terminals of the photovoltaic module (6) have an electrical connotation, with respect to the roofing element (4), that is essentially identical for each roofing element (4) of the covering structure (1).

In an embodiment of the roof structure according to any one of the preceding aspects, said structure (1) includes a predetermined number of first roofing elements (4) arranged in the same prevalent direction (3) forming a first row (13), and a further predetermined number of second roofing elements being arranged parallel to the first roofing elements (4), forming a second row (14).

In an embodiment of the roof structure according to the preceding aspect, the rows of the roofing structure (1) are electrically connected to each other.

In an embodiment of the roof structure according to any one of the above aspects, each of the roofing elements (4) lies in a prevalent development plane (15) and comprises an upper portion (16) and a lower portion (17) opposite the upper portion (16) with respect to the prevalent development plane (15), the upper portion (16) comprising a housing seating (18) destined to engage the photovoltaic module (6).

In an embodiment of the roof structure according to the preceding aspect, the upper portion (16) comprises a plurality of support elements (19) emerging from said upper portion (16), which support elements (19) develop transversally to the prevalent development plane (15), said support elements (19) providing support to the photovoltaic module (6) while keeping it distanced from the upper portion (16) and enabling, in use conditions, passage of at least a fluid between the photovoltaic module (6) and the upper portion (16).

In an embodiment of the roof structure according to any one of the above aspects, each roofing element (4) has a fixed number of coupling elements (20) suitable for enabling engagement of the photovoltaic module (6) to the roofing element (4).

In an embodiment of the roof structure according to any one of the above aspects, the roofing elements (4) have coupling means (21) cooperating between adjacent roof elements (4) such as to define a reversible coupling.

In an embodiment of the roof structure according to the preceding aspect, the coupling means (21) comprise at least a first seating (22) located at a first end (23) of the roofing element (4), at least a second seating (24) located at a second end (25) of the roofing element (4) positioned opposite the first end (23), at least an interconnecting element destined in use conditions to connect said first seating (22) of a roofing element (4) with said second seating (24) of an adjacent roofing element (4).

In an embodiment of the roof structure according to the previous aspect, at least the first seating (22) and/or the second seating (24) of said coupling means (21) are configured such as to allow the interconnecting element to connect with play between said first seating (22) and said second seating (24) of a roofing element (4) of an adjacent row.

In an embodiment of the roof structure according to any one of the above aspects, the roofing elements (4) are made of plastic and/or brick and/or asphalt and/or concrete and/or metal.

In an embodiment of the roof structure according to any one of the above aspects, said covering element (4) comprises a housing cavity (27) exhibiting at least a main access opening located at the upper portion (16), said housing cavity (27) extending transversally to the prevalent development plane (15) of said roofing element (4) and being suitable for receiving the passage of the electrical connection between the photovoltaic module (6) and the connecting element (2).

In an embodiment of the roof structure according to the preceding aspect, said housing cavity (27) comprises a base (128) opposite the main access opening, and at least one containing box (129) which exhibits a coupling profile (130) at the main access opening.

In an embodiment of the roof structure according to the preceding aspect, the containing box (129) exhibits at least a lateral opening (131) which extends along the prevalent development plane (15). In an embodiment of the roof structure according to any one of the above aspects, the roofing elements (4) exhibit at least a through-seating (29) extending from the upper portion (16) to the lower portion (17) of the roofing element (4), the seating (29) being suitable, in use conditions, for passage of electrical connections between the photovoltaic module (6) and the connecting element (2), in particular the through-seating (29) being positioned in proximity of the base (128) internally of the housing cavity (27) such as to enable a connection to the conductor element (10) arranged on the connecting element (2).

In an embodiment of the roof structure according to any one of the preceding aspects, the roofing elements (4) exhibit at least an anchoring foot (30) emerging from the lower portion (17) for coupling the roofing element (4) with the connecting element (2).

In an embodiment of the roof structure according to any one of the preceding aspects, the covering structure (1) comprises at least an elastic element (31) interposed between said roofing element (4) and said connecting element (2) to enable reversible coupling between them, in particular the elastic element (31) being arranged on said anchor element (30).

In an embodiment of the roof structure according to the preceding aspect, the elastic element (31) exhibits at least a fixing portion (32) and at least an anchoring portion (33), respectively suitable for enabling the connection with the anchoring foot (30) and the reversible coupling with the connecting element (2).

In an embodiment of the roof structure according to the preceding aspect, said anchoring portion (33) comprises blocking means (34) and elastic return means (35), said elastic return means (35) at least partially coinciding with the blocking means (34) and being able to deform elastically in order to enable the blocking means (34) to switch from an inserting configuration during the mounting step to a reversible coupling configuration in working conditions.

In an embodiment of the roof structure according to the preceding aspect, the elastic element (31) is made of an elastically deformable material, such as plastic and/or metallic material and/or a combination thereof

In an embodiment of the roof structure according to any one of the above aspects, the photovoltaic module (6) takes a form of laminar pack and extends mainly in a development plane (36), the photovoltaic module (6) including an upper surface (37) and a lower surface (38) delimited by a perimeter edge (39).

In an embodiment of the roof structure according to any one of the above aspects, the structure exhibits at least a connecting element (40) engaged between the roofing element (4) and the photovoltaic module (6) such as to define a reversible coupling between said elements.

In an embodiment of the roof structure according to the preceding aspect, the connecting element (40) comprises a support surface (41) destined to come into contact with said support elements (19) of said roofing element (4) at least a lateral surface (42) being destined to engage corresponding at least partially complementarily-shaped lateral walls of a housing seating (18) for said photovoltaic module (6) present on the roofing element (4), the connecting element (40) exhibiting a C-shaped section for engaging a perimeter edge (29) of the photovoltaic module (6) and preventing delaminations.

In an embodiment of the roof structure according to the preceding aspect, the connecting element (40) exhibits a plurality of pins (43) emerging from the supporting surface (41) and suitable for engaging in the coupling elements (20) of the roofing element (4), enabling reversible coupling there-betrween.

In an embodiment of the roof structure according to the preceding aspect, said pins (43) comprise a series of fastening pins (44) and a series of centring pins (45) respectively for reversibly coupling and for centring the photovoltaic module (6) on the roofing element (4).

In an embodiment of the roof structure according to the preceding aspect, the series of fastening pins (44) are arranged above at least a first adjacent side (46) of said photovoltaic module (6) and said series of centring pins (45) are arranged above at least a second adjacent side (47) of said photovoltaic module (6) consecutive to the first side (46).

In an embodiment of the roof structure according to the preceding aspects, the connecting element (40) comprises two portions (40A, 40B) configured such as to be coupled to opposite sides of the photovoltaic module (6) such as to reversibly couple the photovoltaic module (6) with the roofing element (4).

In an embodiment of the roof structure according to the preceding aspects, the series of fastening pins (44) and the series of centring pins (45) are present on respective portions of the connecting element (40).

In an embodiment of the roof structure according to the preceding aspects, the connecting element (40) has respective portions (40A, 40B, 40C, 40D) for each side of the photovoltaic module (6), in particular such as to cover the entire surface perimeter of the photovoltaic module (6).

In an embodiment of the roof structure according to the preceding aspect, the connecting element (40) exhibits a polygonal configuration, in particular realised by the engagement thereof to portions of said connecting element (40).

In an embodiment of the roof structure according to the preceding aspects, the series of fastening pins (44) and/or the series of centring pins (45) are present on at least one of the portions of the connecting element, in particular on all thereof.

In an embodiment of the roof structure according to the preceding aspects, the series of fastening pins (44) is arranged on at least a first side (48), the series of centring pins (45) is arranged on at least a second side (49) opposite said first side (48).

In an embodiment of the roof structure according to the preceding aspect, the connecting element (40) is made of plastic and/or metal and/or a combination thereof.

In an embodiment of the roof structure according to any one the preceding aspects, the roofing element comprises at least two electrical connection elements (51) and at least one containing body (52), said electrical connection elements (51) being positioned internally of the body (52) and enabling the electrical connection between the photovoltaic module (6) and the connecting element (2).

In an embodiment of the roof structure according to the preceding aspect, said housing body (52) has an open box structure comprising at least a housing base (53) and a perimeter portion of the coupling (54) destined to engage a complementarily-shaped support element (19) of the roofing element (4), said structure also including at least a housing portion (55) located internally of said housing body (52) and extending transversally with respect to said housing base (53).

In an embodiment of the roof structure according to the preceding aspects, said body (52) comprises a plate (56) suitable for closing the opening of said body (52).

In an embodiment of the roof structure according to the preceding aspects, said body (52) exhibits at least a passage opening (156) for electrical contacts located at the housing portions (55) destined to receive the electrical connecting elements (51) for electrical connection with said conductor element (10).

In an embodiment of the roof structure according to the preceding aspect, said plate (56) has an upper surface (57), a lower surface (58) extending in a prevalent development plane (59), and at least one through-seating (60) extending from said upper surface (57) according to the lower surface (58).

In an embodiment of the roof structure according to the preceding aspects, the plate (56) comprises two projecting elements (61) that extend transversally to the prevalent development plane (59) which in use conditions are destined to enable an electrical connection to the positive terminal (8) and respectively to the negative terminal (9) of said photovoltaic module (6) with the connecting elements (51).

In an embodiment of the roof structure according to the previous aspect, the projecting elements (61) are positioned adjacent to the through-seating (60) of the plate (56) enabling a mechanical coupling to the connectors (7) of said photovoltaic module (6) in use conditions.

In an embodiment of the roof structure according to the previous aspect, at least an electrical connecting element (51) is connected with the connector (7) such as to define the positive terminal (8) enabling an electrical connection with the conductor element (10) of said connecting element (2), and wherein the other electrical connecting element (51) is connected to the connector (7) such as to define the negative terminal (9) of another photovoltaic module (6) aligned consecutively to the previous one.

In an embodiment of the roof structure according to the preceding aspects the electrical connecting element (51) comprises at least a first electrical coupling portion (62) configured such as to enable passage of electric current with a terminal of the photovoltaic module (6) and at least a second electrical coupling portion (63) destined to reversibly couple with the conductor element (10).

In an embodiment of the roof structure preceding the preceding aspect, said second portion of electrical coupling (63) is destined to engage to an end of the conductor element (10).

In an embodiment of the roof structure according to the preceding aspects, the electrical connecting element (51) has an elastic structure able to deform to allow connection with a terminal of said photovoltaic module (6) and such as to enable a reversible coupling with the conductor element (10).

In an embodiment of the roof structure according to the preceding aspects, the electrical connecting element (51) is arranged in the housing portion (55) of the housing body (52).

In an embodiment of the roof structure according to the preceding aspects, two electrical connecting elements (51) are present, one for each terminal of said photovoltaic module (6), each configured such as in use conditions to increase the contact surface and so enable the passage of electrical current.

In an embodiment of the roof structure according to the preceding aspects the said plate (56) is made of an insulating material.

In an embodiment of the roof structure according to the preceding aspects, said housing body (52) includes at least a breathable membrane (64) which allows one-way passage of fluids through said body (52), in particular enabling escape of moisture from the housing body (52).

In an embodiment of the roof structure according to the preceding aspects, said body (52) includes at least one passage hole (65) that connects the external environment with the inner environment, the breathable membrane (64) being engaged to said passage hole (65).

In an embodiment of the roof structure preceding the second aspect, the passage hole (65) is located on said housing base (53) of said body (52).

In an embodiment of the roof structure according to the preceding aspects, the breathable membrane (64) includes at least a layer of thermo-mechanically expanded polytetrafluoroethylene (PTFE), such as, for example, Gore-Tex.

In an embodiment of the roof structure according to one any of the preceding aspects, said connecting element (2) includes at least a main member (66) and at least a support element (67) suitable for supporting a predetermined number of conductor elements (10) and coupled to a housing seating (68) of the main member (66).

In an embodiment of the roof structure preceding the second aspect, said main member (66) exhibits at least a housing seating (68) extending along the prevalent development direction (3).

In an embodiment of the roof structure according to the preceding aspects, the connecting element (2) has at least a transversal passage seating (69) that extends through the main member (66) destined to enable passage of the electrical connecting elements (51).

In an embodiment of the roof structure according to the preceding aspects, the main member (66) has at least one transverse blocking seating (70), suitable for engagingly receiving said coupling foot (30) in order to join said connecting element (2) with said cover element (4).

In an embodiment of the roof structure according to the preceding aspects, the housing seating (68) exhibits, in cross section with respect to the prevalent development direction (3), a closed profile, the housing seating (68) being suitable for slidingly engaging to the support element (67).

In an embodiment of the roof structure according to one any of the preceding aspects, said connecting element (2) is made of an insulating material.

In an embodiment of the roof structure according to the preceding aspects, said support element (67) is a single body separated by the connecting element (2) and is entirely contained within said housing seating (68).

In an embodiment of the roof structure according to the preceding aspects said support element (67) includes at least one main frame (71) and a socket element (72) respectively intended to couple with the main member (66) and to couple reversibly with the conductor element (10).

In an embodiment of the roof structure according to the preceding aspect, the socket element (72) exhibits a plurality of consecutively reciprocally aligned and spaced portions according to the prevalent development direction (3), the portions exhibiting in particular a same section, such as to retain said conductor element (10).

In an embodiment of the roof structure according to the preceding aspect, said portions of the socket element (72) are arranged consecutively on said support element (67) and exhibit lengths that are different from one another along the prevalent development direction (3).

In an embodiment of the roof structure according to the preceding aspect, said portions of the socket element (72) are spaced at passage seating (69) such as to enable connection of the electrical connecting element (51) with the conductor element (10).

In an embodiment of the structure according to any one of the preceding aspects, the support element (67) comprises a plurality of supports (82) for the conductors bearing said conductor elements (10) and a box structure (81) designed at least mechanically to connect at least two supports (82) for successive conduits.

In an embodiment of the structure according to the preceding aspect, the box structure (81) comprises two half-shells suitable for being coupled together, in particular the two half-shells being identical, each half-shell exhibiting coupling means (83) for enabling mutual coupling, for example reversible, of the half-shells, such as to define the box structure (81).

In an embodiment of the structure according to the preceding aspects, the box structure (81) exhibits two respective accesses (84) configured such as to receive the electrical connecting element (51) and enable the electrical connection thereof with said conductor elements (10).

In an embodiment of the structure according to any one of the preceding aspects, the box structure (81) comprises two opposite longitudinal accesses (85) along a development axis (86) of the box structure, supports (82) for the conductors successively arranged along the development axis (86) being engaged to the respective longitudinal accesses (85).

In an embodiment of the structure according to any one of the preceding aspects, the box structure (81) comprises blocking means (87) for retaining the conductor supports (82) in place and preventing, in particular, extraction thereof from the respective longitudinal access (85).

In an embodiment of the structure according to any one of the preceding aspects, the box structure (81) comprises at least an axial reference body (88) suitable for receiving the conductor support (82) and determining a correct reciprocal positioning of the conductor (10).

In an embodiment of the structure according to any one of the preceding aspects, the conductor support (82) bears a return conductor (89) isolated from the conductor (10).

In an embodiment of the structure according to any one of the preceding aspects, the ends (10a and 10b) of the conductor (10) emerge from said conductor supports from opposite sides thereof with respect to the development axis thereof coinciding with the development axis of the electrical conductor (10); the ends (10a and 10b being accessible for electrical connection to the photovoltaic module (6).

In an embodiment of the structure according to any one of the preceding aspects, the box structure (81) comprises a constraining and centring element (90) suitable for cooperating with a corresponding seating (91) of the main member (66).

An embodiment of the roof structure (1) for buildings, especially houses, blocks and/or dwellings, includes:
at least a photovoltaic module (6) comprising two electrical connectors (7) exhibiting a potential difference at heads thereof in use conditions of the photovoltaic module (6), the connectors (7),
respectively defining a positive terminal (8) and a negative terminal (9),
a covering element (4) lying in the prevalent development plane (15) and including an upper portion (16) and a lower portion (17) opposite said upper portion (16) with respect to the prevalent development plane (15), said upper portion (16) optionally exhibiting a housing seating (18) suitable for engaging said photovoltaic module (6),
at least a connecting element (40) engaged between the cover element (4) and the photovoltaic module (6) to define a pairing between them, in particular reversible,
characterized in that said connecting element (40) has a main development along a main direction and a transversal section conformed in a "C" shape, comprising an upper tract, a lateral tract emerging transversally from the upper tract and a lower tract emerging transversally from the lateral tract of the opposite end with respect to the upper tract, the tracts delimiting a seating for receiving and engaging a perimeter edge (29) of the photovoltaic module (6).

In an embodiment of the structure according to the preceding aspect, the photovoltaic module is polygonal, in particular rectangular, the structure comprising a connecting element (40) for each side of the photovoltaic module (6).

In an embodiment of the structure according to any the preceding aspect, the connecting elements (40) define a frame delimiting the photovoltaic module (6).

In an embodiment of the structure according to any of the preceding aspects the connecting element (40) comprises a plurality of pins (43) emerging from a support surface (41) and suitable for engaging with corresponding coupling elements (20) of the covering element (4), enabling an optionally reversible coupling, between the two, in particular direct constraining means not being provided between the photovoltaic module (6) and the roofing element (4).

In an embodiment of the assembly process of a roof structure according to one any one of the preceding aspects, the process comprises following steps:
positioning at least a connecting element (2) on an infrastructure;
reversibly mounting at least a covering element (4) on the connecting element such as to define a series electrical connection of adjacent modules.

The object of the following description comprises various parts assembled together, but thanks to the particular structure of individual components reversibly coupled, enables quick and easy deassembly and replacement, if required, of all its parts in order to facilitate any maintenance or repair.

### BRIEF DESCRIPTION OF THE DRAWINGS

Figure 1 is a perspective view from above and partially in section of the roof structure illustrating a single roofing element mounted on a connecting element;
Figure 2 is a perspective view from the upper of the roof structure showing a plurality of roofing elements assembled together;

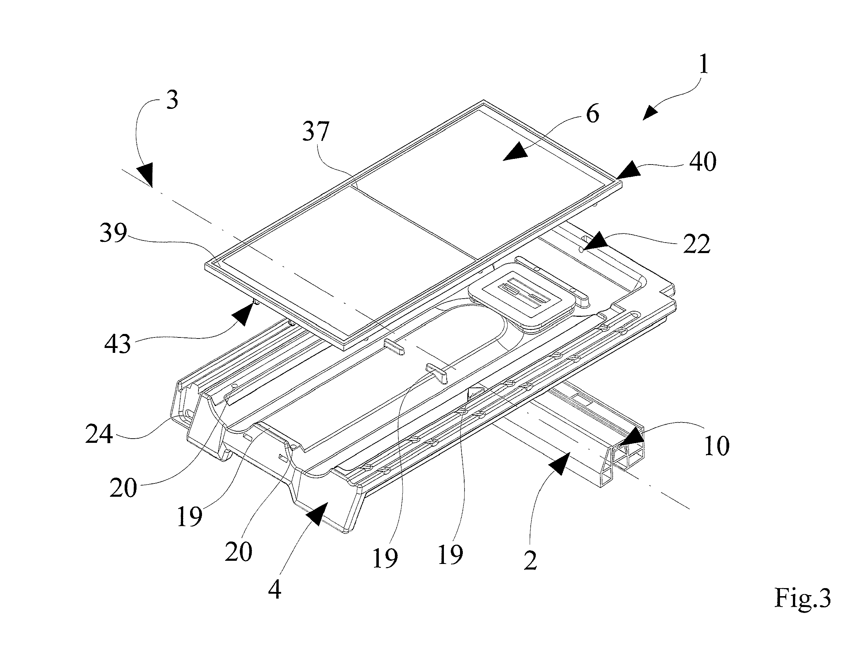

Figure 3 is a perspective view from above showing an exploded view of the roof structure;
Figure 4 is a section view of the roof structure;
Figure 5 is a detail of the section view of Figure 4 of the roof structure;
Figure 6 is a perspective view from above of a first embodiment of the roof structure;
Figure 7 is a view from above of the roofing element of figure 10;
Figure 8 is a view from below of the roofing element;
Figure 9 is a perspective view from below of the roofing element;
Figure 10 is a perspective view from above of the connecting element;
Figure 11 is a side view of the connecting element;
Figure 12 is a perspective view from above of the support element used in the connecting element of figure 10;
Figure 13 is a perspective view from above of the conductor element;
Figure 14 is a perspective view from above showing an exploded view of the assembly: a roofing element, a photovoltaic module and a connecting element;
Figure 15 is a perspective view from above of the photovoltaic module;
Figure 16 is a perspective view from below of the photovoltaic module;
Figure 17 is a lateral view of the connecting element;
Figure 18 is a section view of the connecting element;
Figure 19 is a view from above of the connecting element;
Figure 20 is a section view of the connecting element;
Figure 21 is an exploded view of the electrical transmission element in perspective view from above;
Figure 22 is an exploded view of the electrical transmission element in perspective view from below;
Figure 23 is a lateral view of the electrical transmission element;
Figure 24 is a section view of the electrical transmission element;
Figure 25 is a view from above of the electrical transmission element;
Figure 26 is a detail of the assembly viewed from below: a roofing element, a conductor element, an electrical transmission element;
Figure 27 is a section view of the elastic element assembled to the connecting element;
Figure 28 schematically illustrates the series electrical connection between the photovoltaic panels of a same row with the structure obtained as described herein below;
Figure 29 is a perspective view from above and partially in section of the roof structure illustrating a single roofing element mounted on a connecting element according to a second embodiment;
Figure 30 illustrates a perspective view from below and partially in section of the roof structure shown in Figure 29;
Figure 31 is a perspective view of a support element according to a further embodiment of the connecting element used in combination with the connecting element of figure 29;
Figure 32 is an exploded view in partial section of the roof structure of figure 29;
Figure 33 illustrates a section view of the electrical connecting zone of the roof structure of figure 29, and
Figure 34 illustrates a perspective view of a half-shell of the box structure used to support the element of figure 31.
Figure 35A is a perspective view from above of the roof structure showing a plurality of roofing elements assembled together;
Figure 35B is a perspective view from above of the roof structure illustrating a single roofing element, realised according to a further embodiment, mounted on a connecting element;
Figure 36 shows a detail in cross-section of the roof structure of figure 35B;
Figure 37 is a perspective view of the covering element 35B of figure 36;
Figure 38 is a further perspective view of the covering element 35B of figure 36;
Figure 39 is a further perspective view of a connecting element in accordance with the present invention;
Figure 40 is an exploded view of a further embodiment in accordance with the present invention of the electrical transmission element, in a perspective view from above;
Figure 41 is an exploded view of the electrical transmission element of figure 40 in perspective view from below;
Figure 42 is a lateral view of the electrical transmission element of figures 40 and 41;
Figure 43 is a cross-section view of the electrical transmission element of figures 40-42;
Figure 44 is a detail of a view from below of the assembly: roofing element of figure 37, conductor element, electrical transmission element;
Figure 45 is a detail of a section view of the roof structure in accordance with the further embodiment of figure 35B;
Figure 46A is a perspective view of a support element according to another embodiment of the connecting element used in combination as in figure 29 and/or 39;
Figure 46B is a perspective view of the half-shell of the box structure used for supporting the element of figure 46A;
Figure 47 is a partial perspective view from above of a roof structure of a further embodiment;
Figure 48 is a perspective view partially from below of the roof structure of figure 47.

### DETAILED DESCRIPTION

With reference to the accompanying figures of the drawings, 1 denotes in its entirety a roof structure 1 for buildings, especially houses, blocks, dwellings and/or the like.

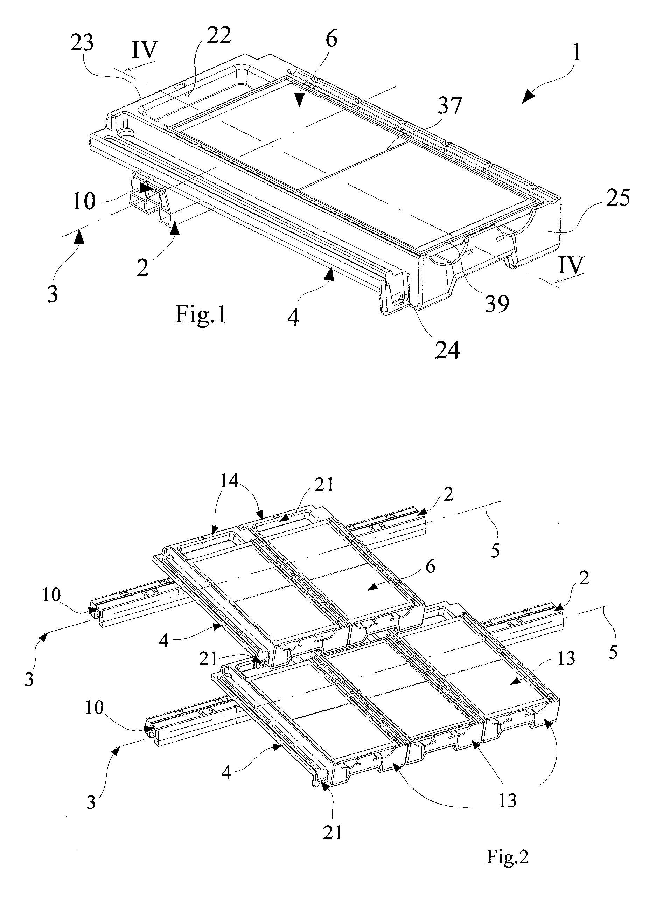

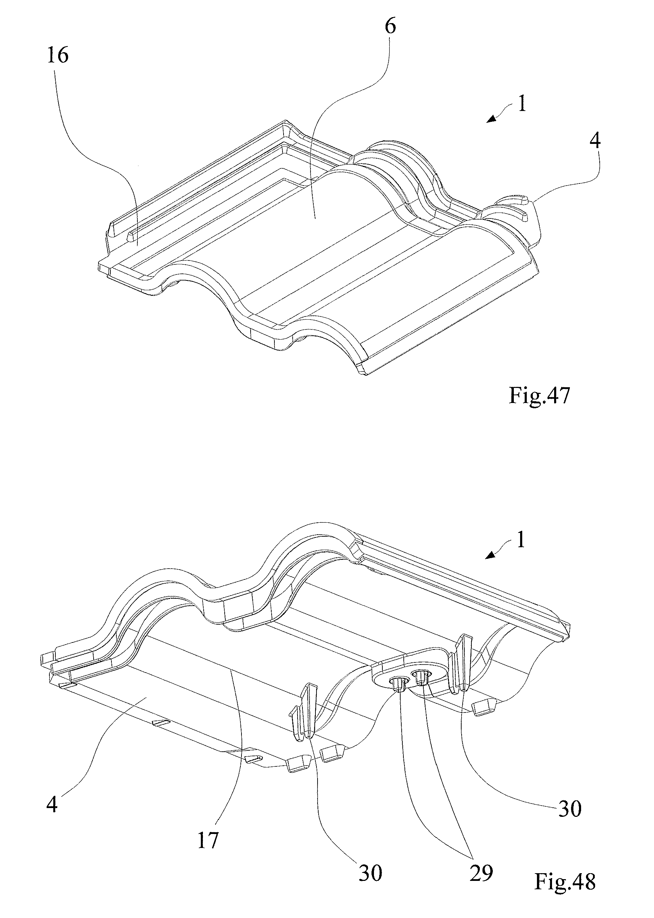

The main elements forming the roof structure include: a plurality of covering elements 4 made at least partially, and in general completely, of a plastic material (e.g. moulded) configured such as to resemble terracotta tiles of a common Marseille type (for example schematically represented in figure 1) or Portuguese (schematically represented in figures 47 and 48) roofing; a certain number of connecting elements 2 in the form of extruded plastic or metal profiled members define/replace the wooden beams of a common roof, on which the covering elements engage such as to define the electrical connections as described in greater detail in the following, and at least one photovoltaic module 6 (usually consisting of two photovoltaic cells) is mounted on each of these items cover 4 to enable, once in use, generation of an electrical current.

Still from the general point of view, figure 2 illustrates in partial section a pair of connecting elements 2 to which the roofing elements or tiles are coupled (on two rows and staggered) such that tiled roofs are suggested when the present roofing is installed.

As can be understood, the roofing elements 4 are suitable for coupling to the connecting elements 2 along predefined rows developed in horizontal directions in the laying condition of the structure, such as to be able to define at least a roofing surface portion of the building, if not the whole roofing structure itself.

In particular, once installed, the roofing will cover a plurality of rows 13 14, each consisting of adjacent and contiguous roofing elements and in particular successive rows will exhibit staggered roofing elements partially overlapping those of the previous row (figure 2).

Obviously configurations can be envisaged in which all or only some of the roofing elements 4 are provided with photovoltaic modules, but in any case all such configurations are equally comprised in the concept of this invention.

With the above general premises the following is a detailed description of the construction of each of the three above-mentioned elements and in particular details will be described of their mechanical and electrical in a reciprocal engagement situation.

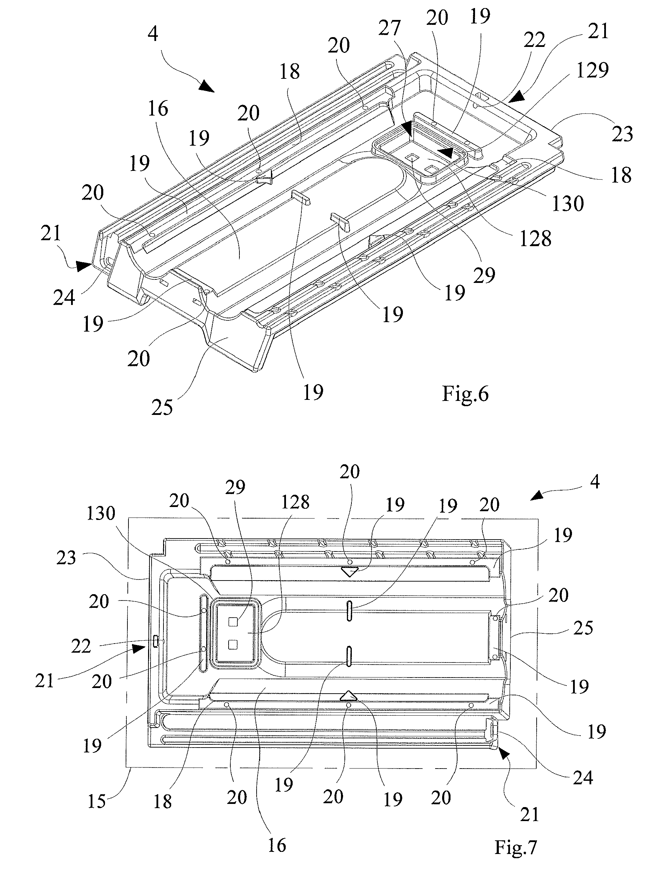

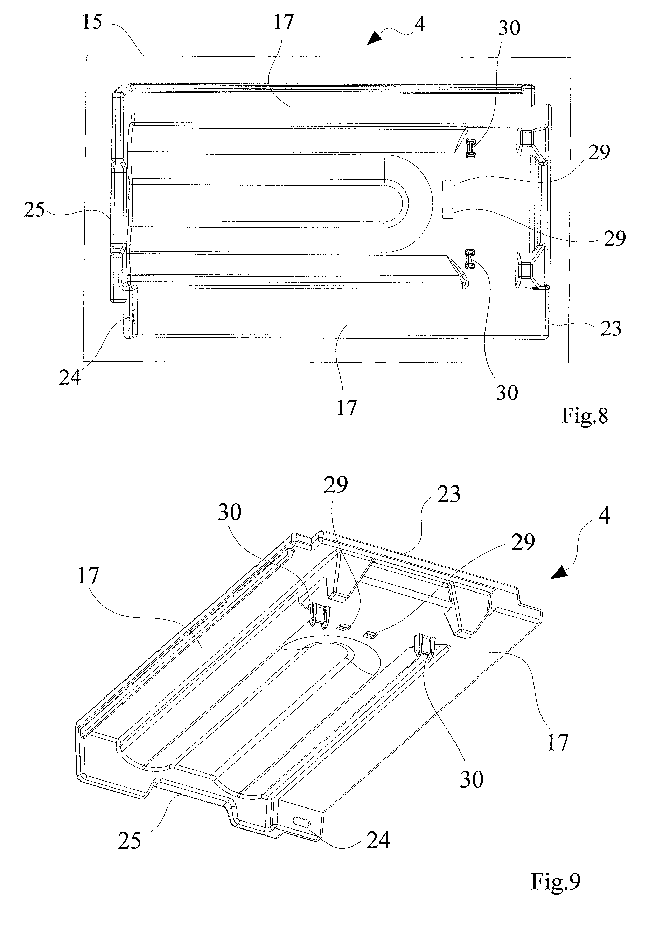

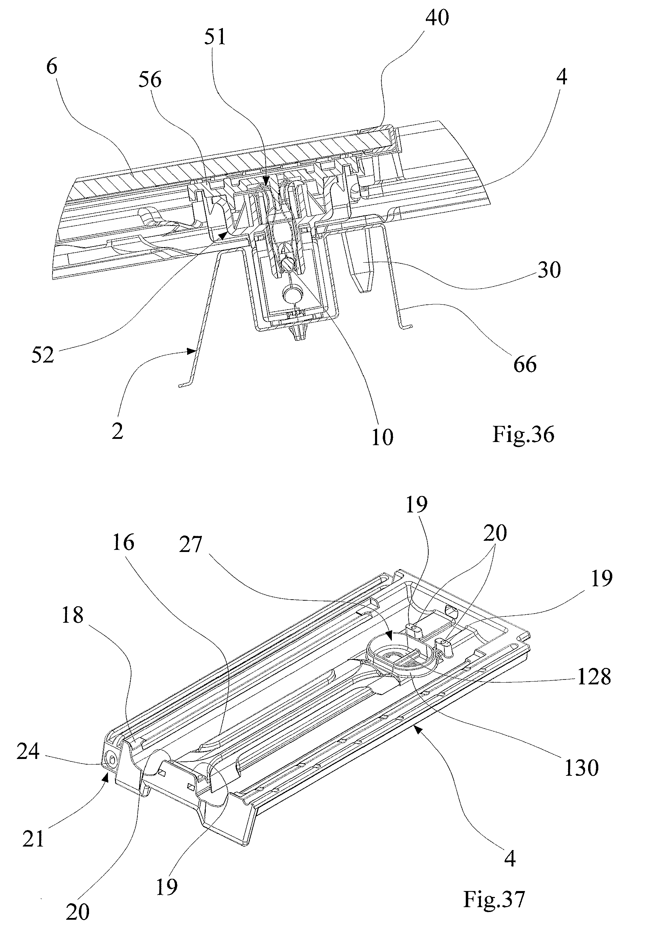

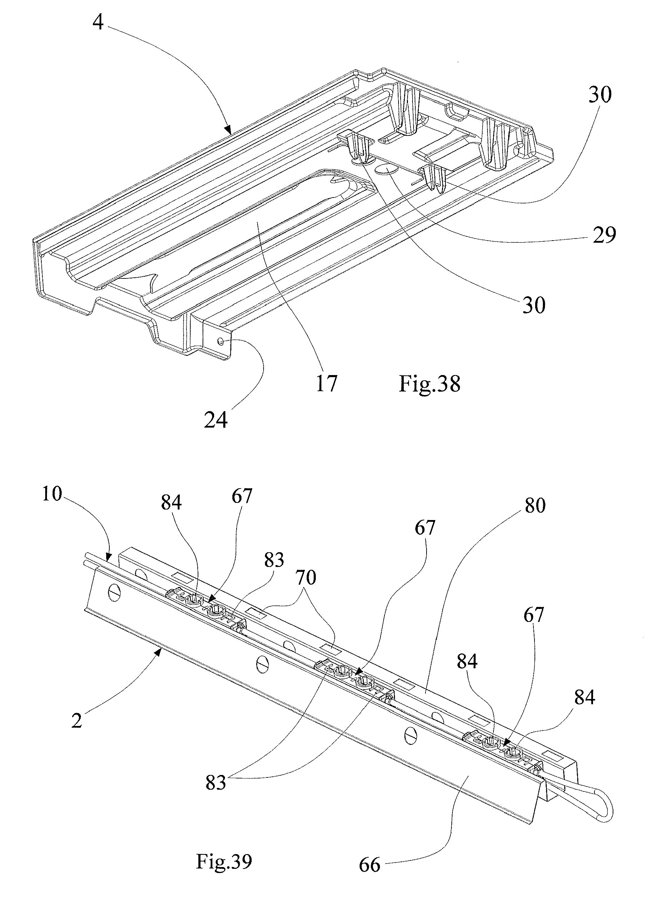

Beginning from a structural point of view, the roofing element 4 clearly illustrated in detail in figures 6 to 9 and in figures 37 and 38 firstly it can be noted that it exhibits a prevalent development plane 15 and is delimited by an upper portion 16 and an opposite lower portion 17 with respect to the prevalent development plane 15.

The upper portion 16 comprises a housing seating 18 which is designed to receive, as will be more fully explained in the following, the photovoltaic module or modules 6.

In detail, the upper portion 16 exhibits a plurality of support elements 19 clearly illustrated in figure 7, which emerge from the upper portion 16 transversally to the prevalent development plane 15.

In detail, the support elements 19 provide support for the photovoltaic module 6 but maintain the module 6 spaced from the upper portion 16 so that, in use of the system, passage of a fluid (i.e. air) is allowed between the photovoltaic module 6 and the upper portion 16 which enables (in a passive way) cooling the structure.

Note that the support elements 19 may be shaped and configured in any way, while seeking to avoid that any possible applied loads on the modules might cause flexion or distortion which could lead to damage or breakage.

In this regard, figure 7 clearly shows the presence of support elements 19 at opposite longitudinal sides of the photovoltaic module 6, as well as at the central portion (with two emerging elongate surfaces) and the more proximal parts of the further upper and lower ends. In a further embodiment the support portions 19 are arranged at the transversal sides (shorter sides of the roofing element 4) of the photovoltaic module 6, as shown in figure 37.

Note also how each roofing element 4 also exhibits a predetermined number of coupling elements 20 (in the embodiment holes, but alternatively either pins or projections in a totally equivalent way) which are destined to enable engagement of the photovoltaic module 6 on the roofing element, as will be more fully explained herein below.

Note also how the coupling elements 20 are positioned exactly at some of the support elements 19 mentioned above, in such a way that during the step of coupling the photovoltaic module 6 to the roofing element 4, the aforementioned support and coupling relation is achieved.

The roofing elements 4 further exhibit respective and further coupling means 21, which are destined to cooperate with adjacent roofing elements 4 to define a stable but reversible coupling there-between.

Figure 2 illustrates an engaged condition between flanked adjacent roof elements and in which solidarity between the elements is achieved precisely by means of the above-mentioned coupling means 21.

In particular, the coupling means 21 can include a first seating 22 located at a first end 23 of the roofing element 4 and at least a second seating 24 located at a second end 25 of the roofing element 4 positioned opposite the first end 23.

Finally, the coupling means 21 also include an interconnecting element which, in use conditions, will be destined to connect the first seating 22 of a roofing element 4 with the second seating 24 of an adjacent roofing element 4 and in particular positioned on an immediately parallel row, as shown in figure 2.

At least the first seating 22 or the second seating 24 (if not both) of the coupling means 21 are configured in such a way as to enable the connecting element an engagement between adjacent roof elements, with a possibility of compensating for manufacturing tolerances and/or mounting.

In other words, at least one of said first and said second seatings 22, 24 has a slotted profile such as to enable passage of the connecting element, even with an imperfect alignment to the centre of the holes 22, 24.

It is clear that the interconnecting element can be any means capable of enabling a stable but reversible coupling between two adjacent roof elements.

Moreover, the presence of a first seating 22 and a second seating 24 of each of the covering elements 4 enables mutual engagement of all the elements making up the roof structure such as to guarantee the overall reliability of the structure and a stability of position thereof even in the presence of loads or stresses on the tiles, such as workers performing routine maintenance operations or weather conditions such as wind and rain.

Note also that the structure of the tiles comprises a relative positioning there-between that is staggered with respect to subsequent rows and therefore the first seating 22 and the second seating 24 are positioned staggered at the respective first end 23 and second end 25.

In particular, a seating will be positioned at the centre of the side, while the other seating will be positioned at an end of the side, as clearly shown in figure 6.

Looking at the Figure 6 and 37, note how the covering element 4 also includes a housing cavity 27 provided with a main access opening afforded at the upper portion 16 (or superiorly open portion); the housing cavity 27 extends transversally to the prevalent development plane 15 of the covering element 4 and is destined in use to accommodate a junction box (described herein below) and to enable passage of electrical connections between the photovoltaic module 6 and the connecting element 2, as will be more fully described herein below.

In structural detail, the housing cavity 27 has a main base 128 opposite the access opening and a containing element 129 exhibiting a coupling profile 130 at its main access opening to enable the above-mentioned coupling of the container box body mentioned above.

Note also that, precisely at the containment element 129, at least one and generally two through-seatings 29 are present, which place the upper portion 16 in connection with the lower portion 17 of the covering element.

The through-seatings 29 are intended, in normal use conditions, for passage of electrical connections 7 between the photovoltaic module 6 and the connecting element 2.

In detail, the through-seatings 29 are positioned near the base 128 inside the housing cavity 27 such as to enable direct connection to a conductor element 10 arranged on the connecting element, as will be explained in more detail in the following.

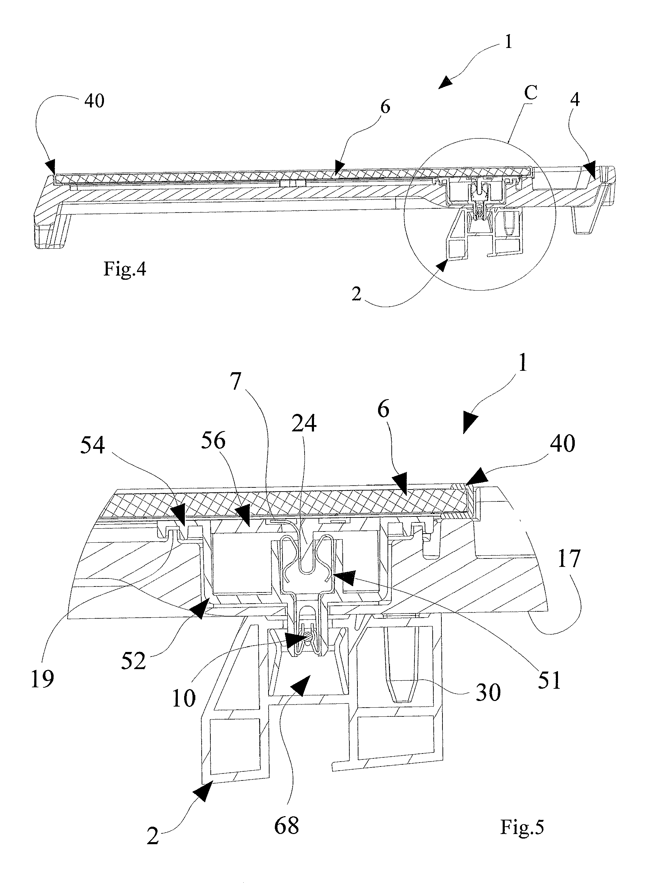

Observing figures 5, 8, 36 and 38, note how the roofing elements 4 also exhibit at least an anchoring foot 30 (and generally two) emerging from the lower portion 17 and destined to couple the roofing element 4 with the connecting element 2.

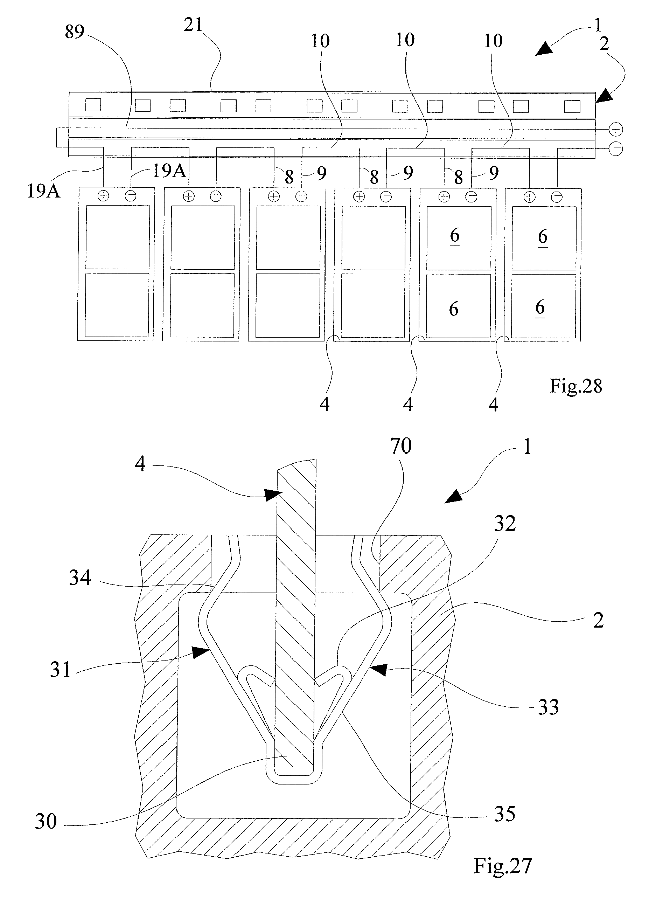

The anchoring feet 30 are defined by emerging portions having two thickened lateral walls and a flat central portion for engagement to an elastic element 31, shown in figure 27, which is interposed between the roofing element 4 and the connecting element 2.

The elastic element 31, separated but engageable substantially unremovably to each of the anchoring feet 30, enables a snap fitting between the roofing element 4 and the connecting element 2.

Figure 27 shows a detail of the central portion of the flat centre portion of the anchoring foot 30 to which the elastic element 31 is constrained, which elastic element 31 in turn comprises a fixing portion 32 and an anchoring portion 33 respectively destined to enable connection with the anchoring foot 30, substantially unremovably and in a reversible coupling with the connecting element 2.

In other words, blocking means 33 located at the anchoring portion are substantially defined by an undercut 34 obtained by deformation of a bent metal strip and elastic return means of 35 made of metal, which can elastically deform such as to enable the blocking means 34 to switch from an insertion configuration during the mounting operation to a reversible coupled configuration in a work condition illustrated in figure 27.

In still other words, the shape of the metal plates is such as to enable, during the insertion stage, a nearing by elastic deformation between the tabs 34 themselves and then a return to a starting position once inserted in the connecting element 2 destined to receive them. In this way a firm and stable coupling is guaranteed, but also a reversibility thereof as an extraction in the reverse direction to the inserting direction (with a sufficient force) enables decoupling of the covering element from the connecting element 2.

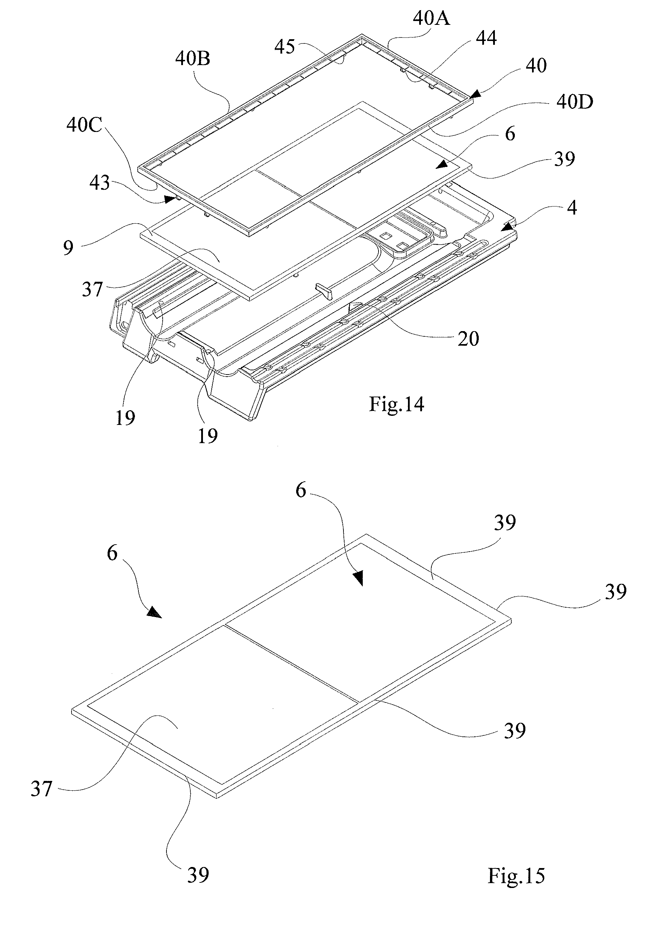

As mentioned the element 31 is made of elastic metal material, although it could be made of a suitable plastic material or a combination of these. In the description of the covering element 4 reference has been made to a single Marseille tile. The same structure can be applied to a covering element for tiles of the Portuguese type (the latter being represented in figures 47 and 48). Turning now to the photovoltaic module 6 (figures 14, 15, 16), note how in its essential components it is of known type and preferably acquired from photovoltaic module suppliers. It is in the form of a laminar stack, exhibiting a prevalent development plane 36 provided with an upper surface 37 and a lower surface 38 delimited by a perimeter edge 39.

The actual photovoltaic module will not be further detailed as it is of known and conventional type. Moreover, the dimensions of the photovoltaic module 6 used is generally standard and therefore the realization of the most advanced photovoltaic modules is fully compatible with the use thereof on roof elements 4 of the type described above which are intended for and configured such to receive two of thee modules 6 having standardized dimensions.

Turning to observe the figures 14 to 20 and figure 35 note how roof structure also includes at least a frame-shaped connecting element 40 suitable for enabling the coupling between the covering element 4 and the photovoltaic module 6.

In this case too the coupling is reversible so that rapid and effective interventions can be made at any time on the structure of the covering element 4, as can replacement of any damaged 6 photovoltaic modules.

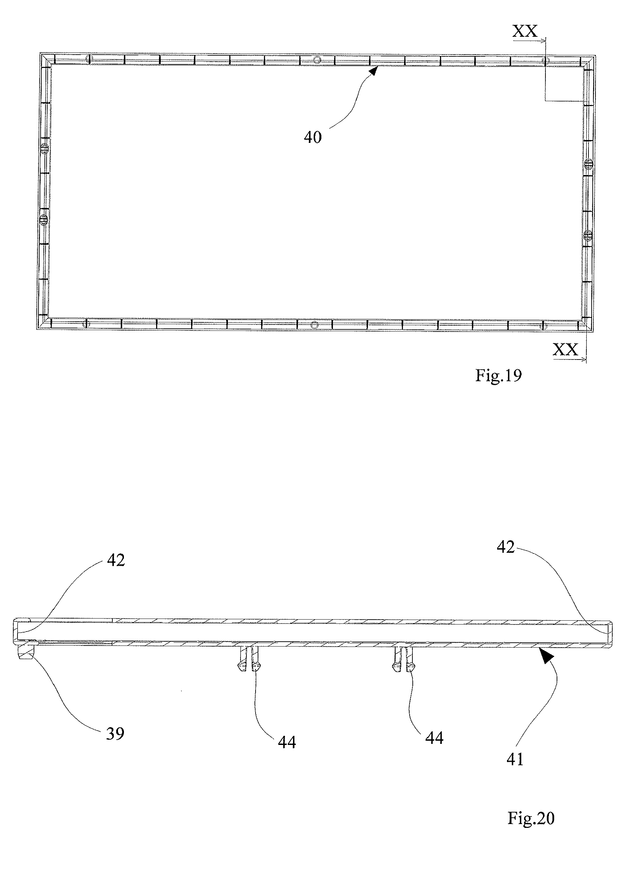

The connecting element 40 comprises at least a first support surface 41 (figure 20) which abuts and also enables a connection with the above-mentioned support elements 19 of the roofing element 4.

A lateral surface 42 of the connecting element 40 is destined to engage in the complementarily-shaped covering element 4; in transversal section the connecting element 40 exhibits a C shape with a gripping section in particular complementarity shaped with respect to the perimeter edge 39 of the photovoltaic module 6, thus, in use conditions, preventing any eventual delamination of the photovoltaic module itself.

A plurality of pins 43 emerge from the support surface 41, destined to reversibly engage with the coupling elements 20 of the covering element 4.

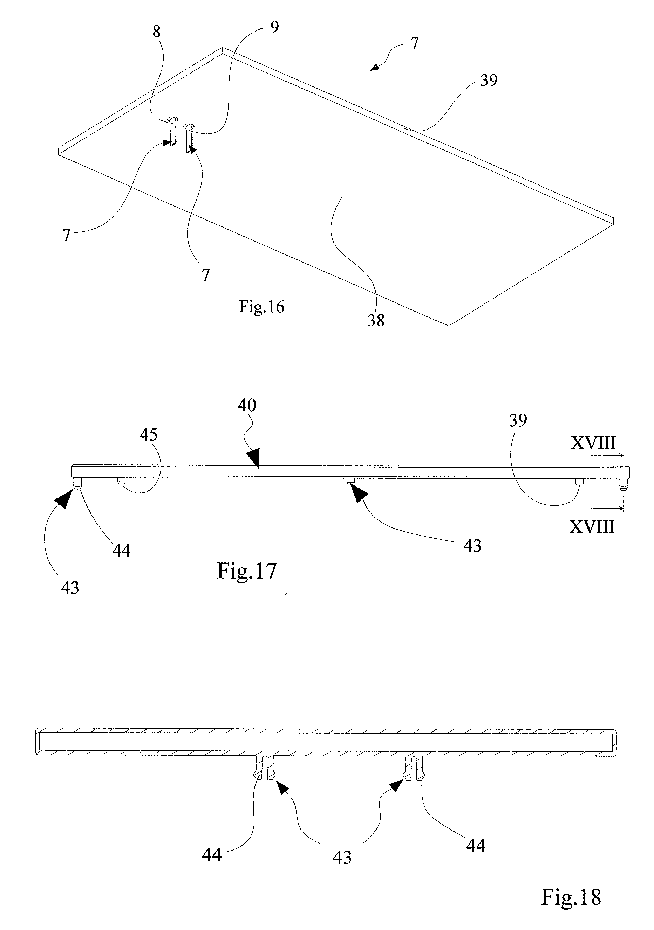

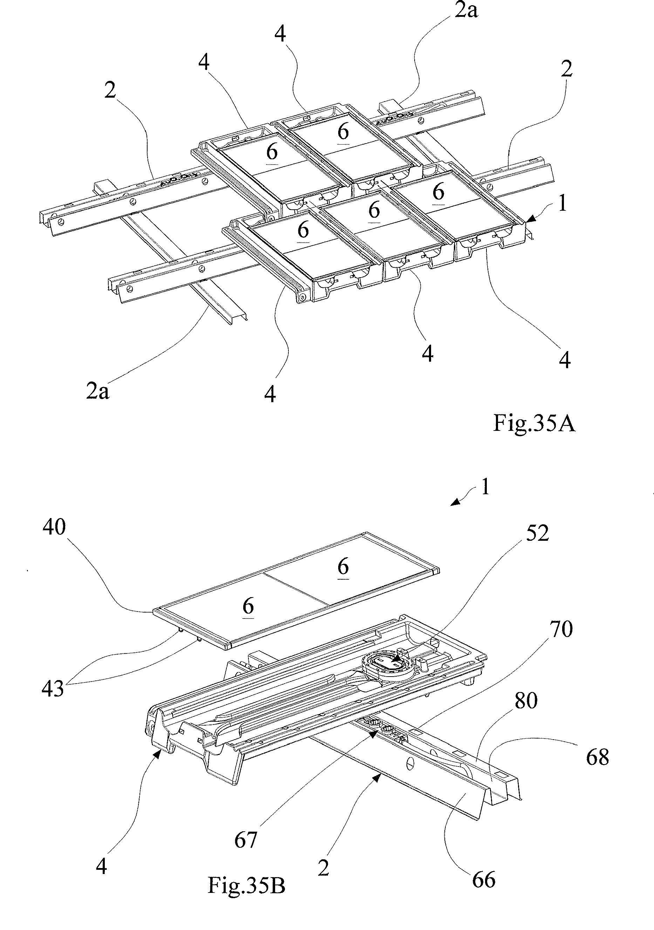

In general, the pins 43 shown for example in figures 17 and 35 are destined to guarantee correct positioning of the module on the covering element 4 and/or can also ensure a stable and reversible coupling.

In the specific illustrated embodiment the pins 43 comprise a series of fixing pins 44 (figure 20) defined by a broad elastic head section capable of deformation on entry into suitable seatings that are complementarily shaped, and able to prevent decoupling.

In the specific illustrated embodiment the pins 43 include a series of centring pins 45 (figure 17) defined by a chamfered entry section and a cylindrical body that can allow entry into appropriate complementarily-profiled seatings, thus facilitating the relative centring and positioning.

In particular, these pins 44 are arranged for example at least one first side 46 of a photovoltaic module 6, while the centring pins 45 are arranged at a second side adjacent to the first side 47. Obviously any configuration enabling a reversible engagement and centring of the photovoltaic cell is also comprised.

In general, the connecting element 40 is configured as a frame, i.e. it is free to engage each free side of the photovoltaic modules 6.

In other words, the connecting element 40 also has a polygonal configuration, in particular rectangular.

In any case, at least two portions of the connecting element 40 can be present (in particular separated from one another) arranged for example on opposite sides of the photovoltaic module 6 and destined to couple reversibly with the roofing element.

Note however that the frame 40 has the aim of reinforcing the perimeter edge of the photovoltaic module and enable a constraint to the roofing element 4 without need for glues, screws, rivets or similar unreversible engaging systems.

A sealant can be inserted between the frame 40 and the perimeter edge 39 of photovoltaic modules to prevent infiltration of water, moisture or dirt.

As can be observed in figures 4 and 5, the photovoltaic module 6 (or the pair of photovoltaic cells) exhibit, at their bottom surface 7, suitable electrical connectors which are coupled electrically to at least two electrical connecting elements 51.

In detail, a containing body 52 is exhibited within which the electrical connecting elements 51 are arranged. These enable an electrical connection between the photovoltaic module 6 and the connecting element 2.

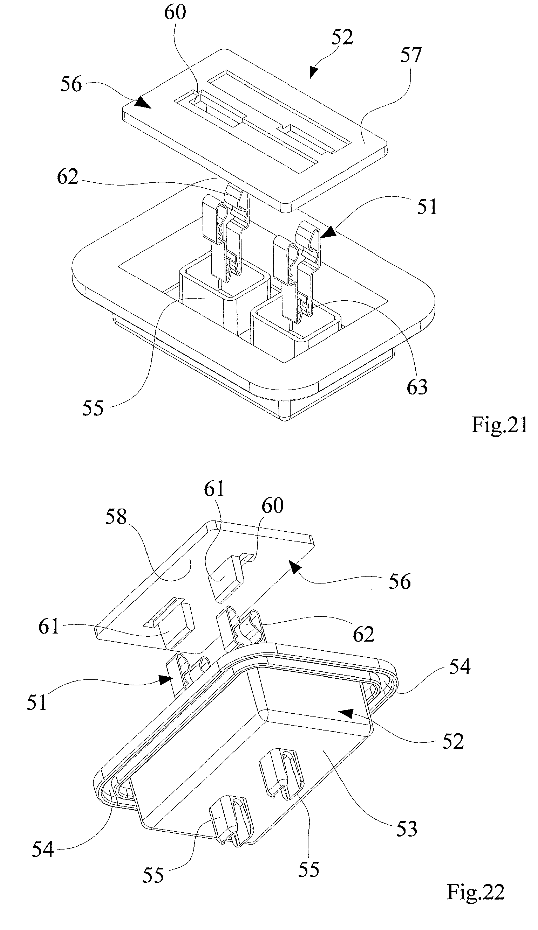

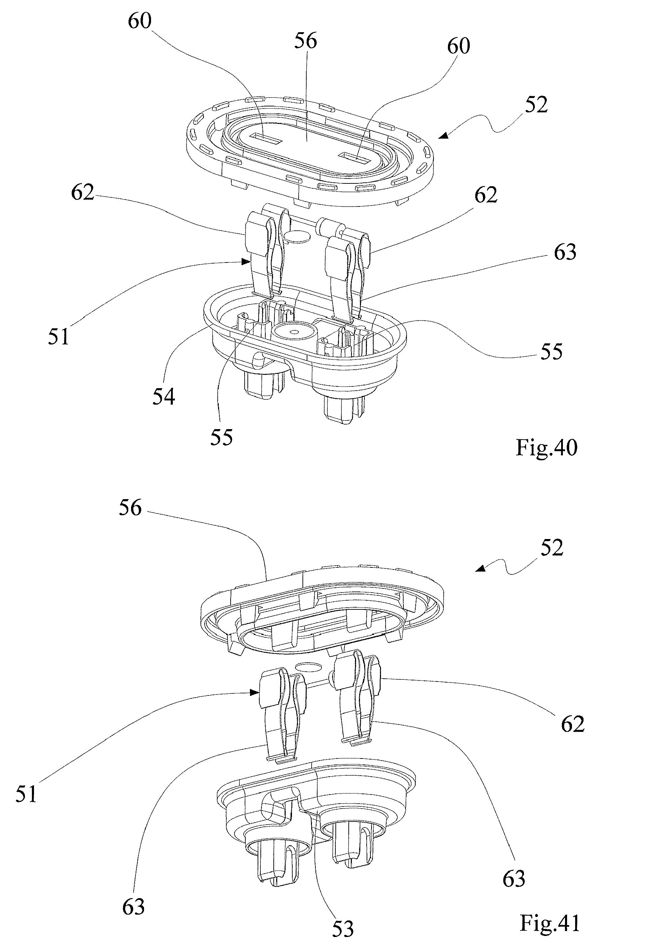

In particular, figures 4, 5 and 36 illustrate the assembled structure diagram, while figures 21 to 26 and 40 to 43 illustrate in detail the structure of the box body.

As mentioned the containing body 52 has an open box structure comprising at least one housing base 53 and also has a profiled perimeter coupling portion 54 destined to engage to a supporting element 19 of the roofing element 4 (figure 5).

A housing portion 55 positioned partially internally of the said body 52 and partially emerging therefrom receives and retains the elements of the electrical connection 51 in order to enable the electrical connection.

In figure 22 and figures 40 and 41 then the presence can be observed of a plate 56 designed to close the opening of the body 52.

The body 52 exhibits a passage opening for contacts 156 at the above-mentioned housing portions 55 such as to enable passage of the electrical connecting elements 51 for the electrical connection with the conductor element 10.

In detail, the electrical connection between the photovoltaic modules 6 and the connecting element 2 is realised as follows.

The plate 56 exhibits a top surface 57 having two through-seatings 60 extending between the top surface 57 and a bottom surface 58.

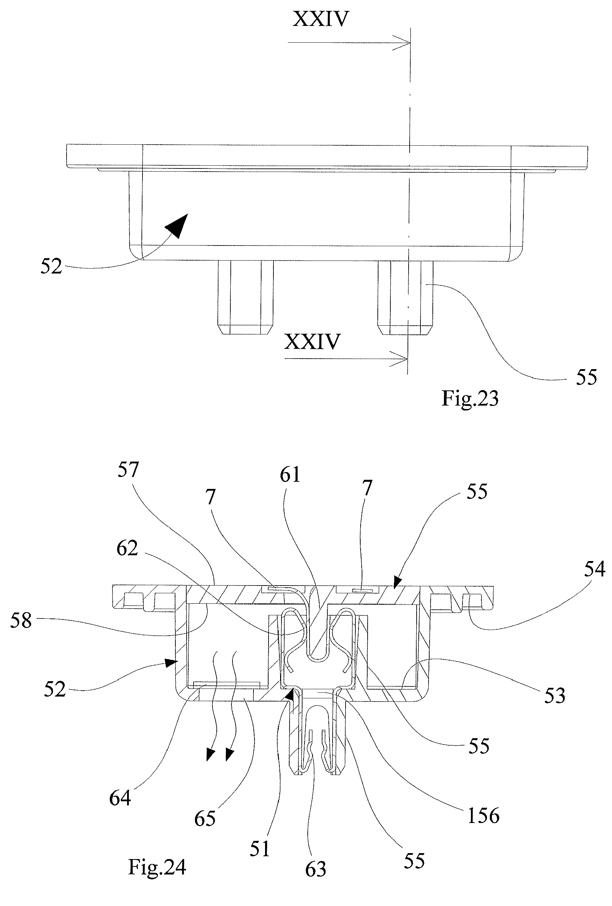

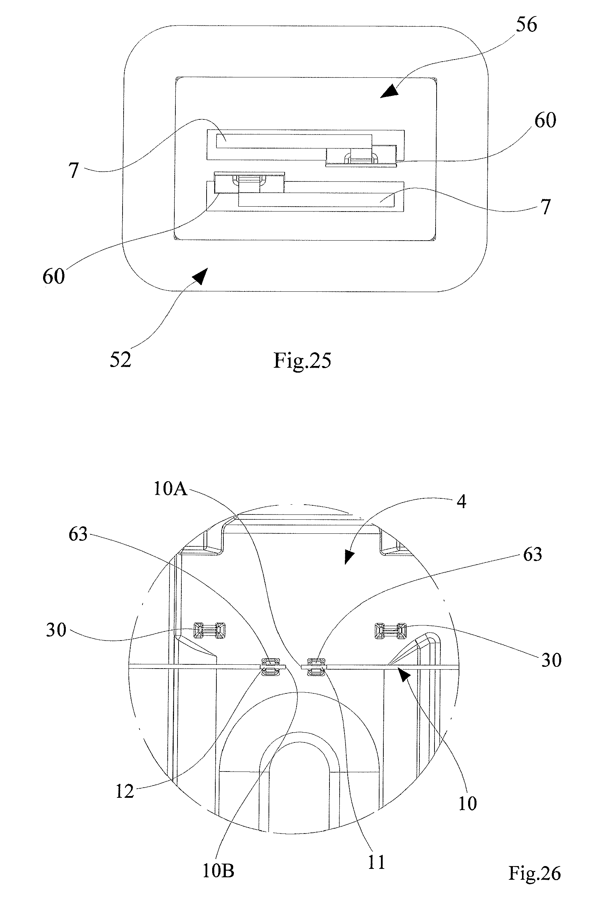

The two electrical connectors 7 emerging from the photovoltaic modules 6 in the form of metal plates are arranged in longitudinal seatings of the plate 56 such as to emerge inferiorly of the through-seatings 60 (see for example figures 24 and 25).

The contacts 7 pass through the plate 56 toward the lower surface 58 and are arranged, supported and partially enveloped on respective projecting elements 61 which extend transversally with respect to the prevalent development plane of the plate 56.

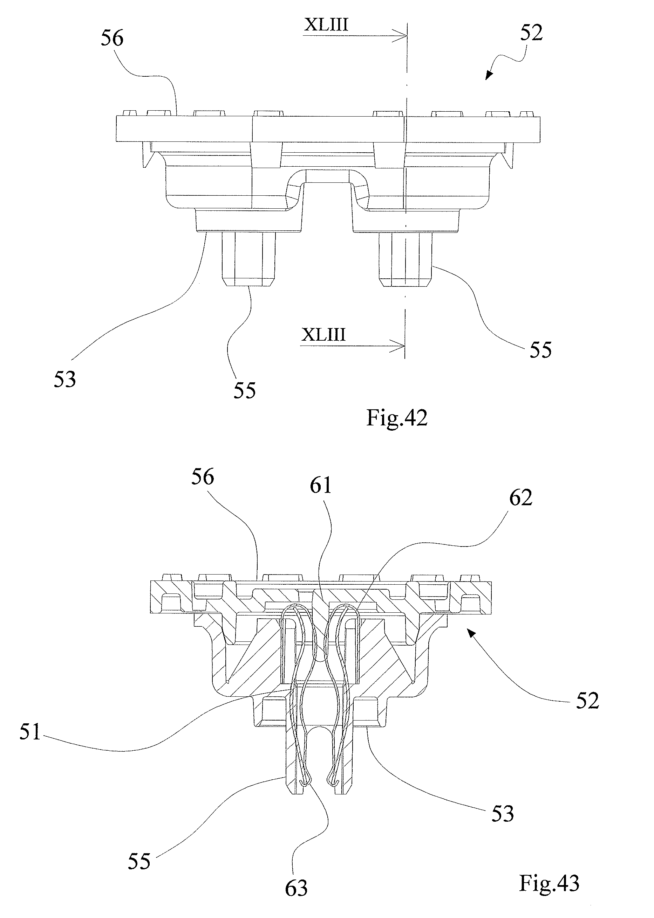

The projecting elements 61 are positioned adjacent to the through-seating 60 and receive the connectors 7, as is clearly illustrated in figure 24 and figure 43 so as to be enveloped along both opposite vertical surfaces.

The electrical connection element 51 has respective first electrical coupling portions 62 to the conductors 7 which elastically act on the opposite surfaces of the projecting element 61 in such a way as to ensure a double contact on the connectors 7, which increases the reliability of the electrical transmission.

As mentioned, electrical connecting elements 51 are accommodated inside the housing element 55 and a second portion 62 of electrical coupling to the conductor element allows the transfer of the current to the connecting element.

In other words, each electrical connecting element 51 (one is connected to the positive terminal 8, the other to the negative terminal 9 of each photovoltaic module) is destined to carry the potential difference from the electrical connectors 7 to the conductor element 10 of the connecting element 2. In the embodiment shown schematically in figure 24, the junction box 52 has at least one passage hole 65, which connects the outside with the inside of the junction box 52. However, the passage hole is closed by a suitable breather membrane 64 which allows one-way the passage of fluid (particularly water and/or moisture) between the inside and the outside of the body 52.

In other words, moisture which might in some way enter into the electrical junction box 52 is thus released.

Advantageously the hole 65 is located on the housing base 53 of the body 52 such as to facilitate the expulsion of moisture/water.

The breathable membrane 64 can be made of a material such as Gore-tex.

Turning now to the description of the connecting element 2 in a first embodiment thereof, and referring in particular to figures 1, 5, and especially 10-12, note that the connecting element 2 is constituted by at least one main member 66, for example, an extruded plastic or metal (in a preferred embodiment of the main member 66 comprises a galvanized metal sheet), multi-cell, which optionally comprises an internal support element 67, separated and insertable, destined to support a predetermined number of conductor elements 10 .

The main member 66 has at least one housing opening 68 (e.g. having a closed transversal section) that extends in the prevalent development direction 3 and slidingly receives the support element 67 (entirely housing it).

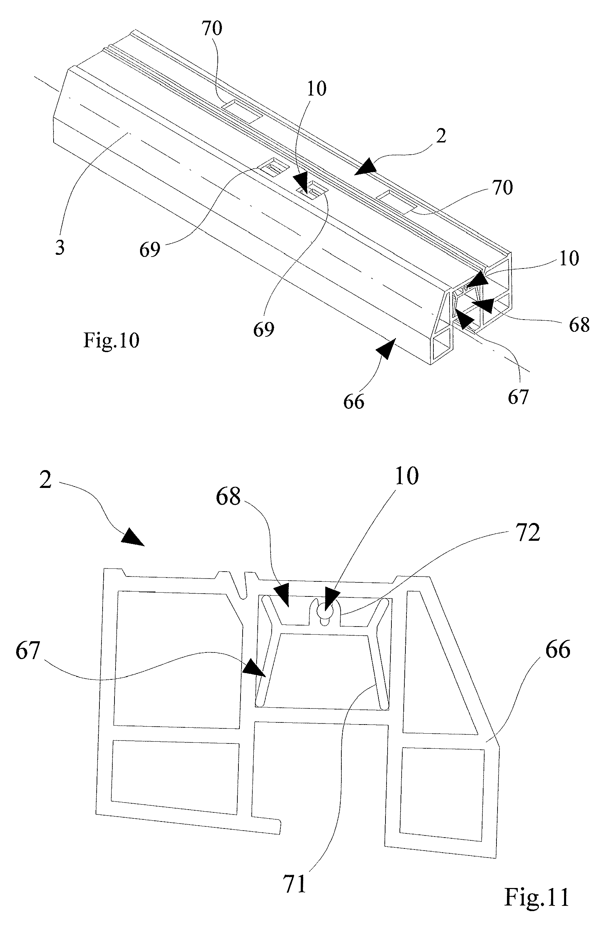

The connecting element 2 also exhibits a plurality of transversal through-seatings 69 that extend through the main member 66 and enable access to the housing seating 68 at predetermined longitudinally spaced areas (figure 10).

In particular, the transversal seating 69 enable the passage of the above-mentioned electrical connecting elements 51.

The main section 66 also exhibits at least a predetermined number of transversal blocking seatings 70 which are in turn destined to engage the respective anchoring feet 30 (and in particular the elastic elements 31) borne by the respective roofing elements.

In figure 11 it can be observed that the support element 67 exhibits in section a structure having a main frame 71 to which a socket element 72 is coupled, destined respectively to engage the main member 66 and to reversibly couple with the conductor element 10.

The socket element 72 has a plurality of consecutive portions aligned and spaced in the prevalent development direction 3; the portions in particular have the same section for a snug fit that retains the conductor element 10.

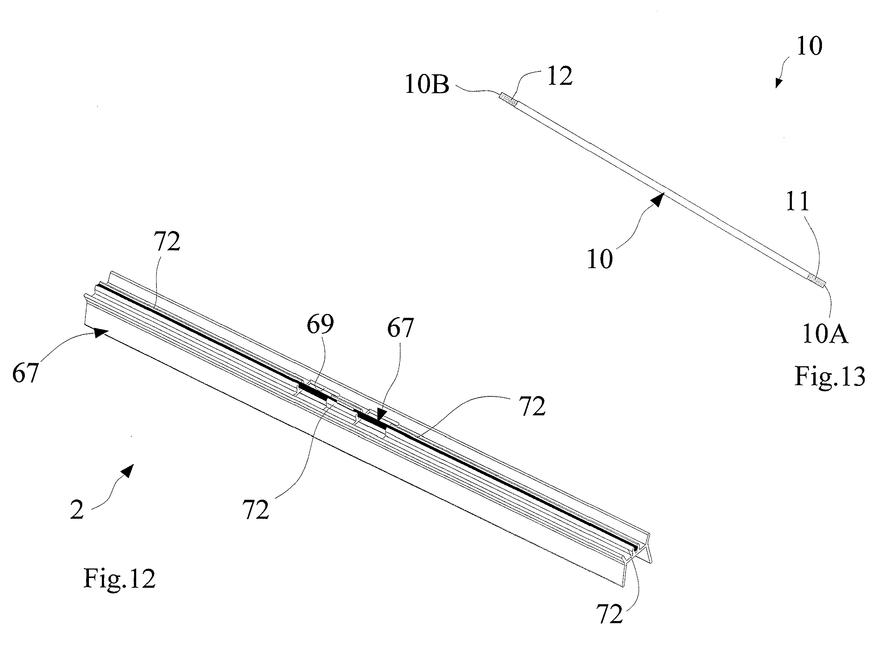

The consecutively aligned portions of socket elements 72 are spaced from each other according to the prevalent development direction 3 as shown in figure 12.

Note also that they are arranged consecutively on the element support 67 and exhibit different lengths along the mentioned prevalent development direction 3.

In particular, the consecutively aligned portions of socket elements 72 are spaced (separated) at the passage seatings 69 so as to allow a more simple and easy connection of the electrical connecting element 51 with the conductor element 10.

In particular, the conductor element 10 is defined by a piece of electric cable which has respective end portions 10a and 10b destined to electrically connect the positive terminal 8 of a photovoltaic module with the negative terminal of the immediately adjacent photovoltaic module 9.

In particular, the conductor element 10 in the form of a bare wire (without insulation) is associated with the aforementioned socket element 72 over a prevalent portion of its longitudinal development. At the passage seatings 69, however, there is an interruption in the continuity of the socket element 72 so that a portion of the bare ends (10a or 10b) of the element wire 10 is exposed and can be engaged by the electrical connecting element 51, as is clearly shown in figure 5.

Figure 12 shows a portion of the socket element 72 (central in the figure) with a smaller longitudinal development, which receives the terminal ends of consecutive conductors 10, keeping them spaced and electrically isolated from one another.

As can be understood, and still observing figure 12, two consecutive electrical connecting elements of 51 of a photovoltaic module respectively engage a first conductor element 10 and a next conductor element 10, electrically isolated from one another.

In this way, each conductor element 10 receives, at its first end 10a, the positive terminal 8 of a photovoltaic module 6 and the opposite end 10b receives the negative terminal 9 of the immediately adjacent photovoltaic module 6.

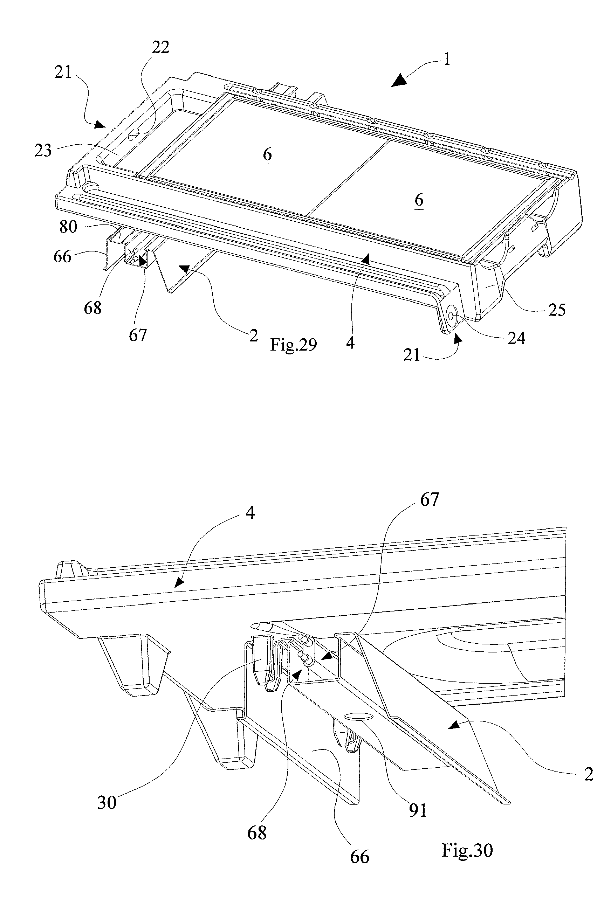

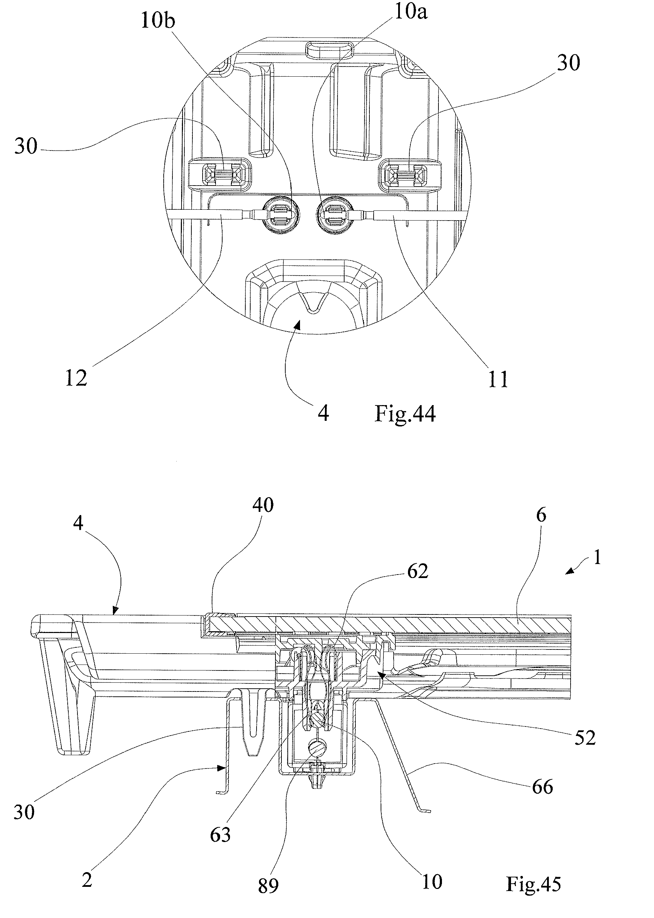

Figures 29 to 45 illustrate a same roofing element 4 coupled to a connecting element 2 of a different form and profile from the one previously mentioned (second embodiment).

Obviously, apart from the last-mentioned element, all the technical and geometric characteristics of the roofing element 4 described above, as well as the photovoltaic module 6 and the corresponding frame, are largely unchanged and may equally be included in the embodiment illustrated in figures 29 - 45 (and for this reason are not described again).

In still other words, both the electrical connections and the various structural parts of the roofing element 4, the photovoltaic module 6 and the junction box remain unchanged and can be used interchangeably with connecting elements 2 according to figure 10 or for example according to figure 29.

The only slight variant (shown in figure 29) is the inversion of the slotted seating for the connection of multiple tiles with each other, which slotted seating has been positioned at the hole 22 present in the end 23, reversing the operating configuration shown in figure 1.

Turning to the description of the connecting element 2 (second embodiment), it is in the form of a profiled member 66 that can be made of metal (preferably a galvanized metal sheet) or plastic with an open section (without closed cells).

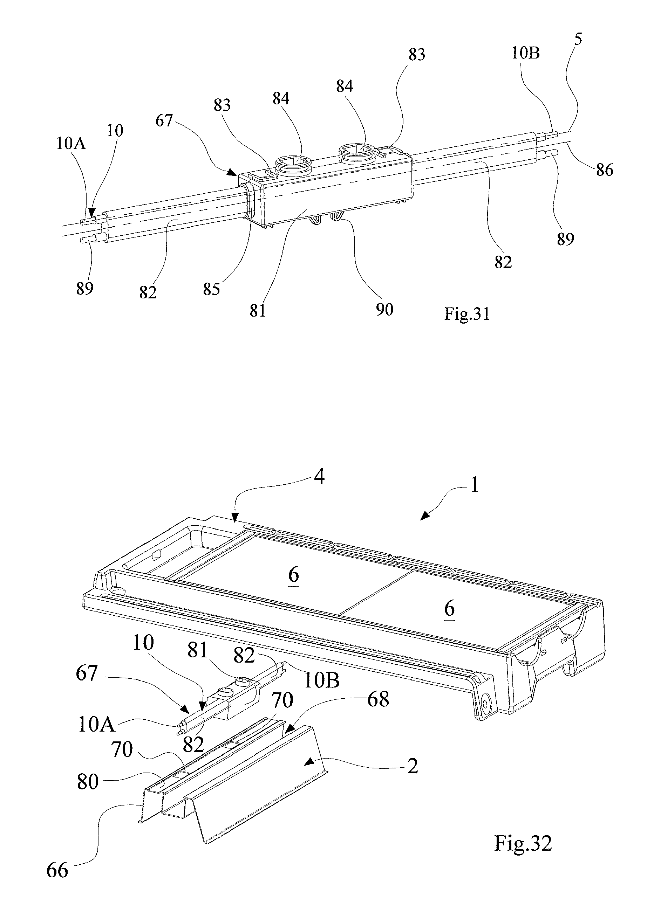

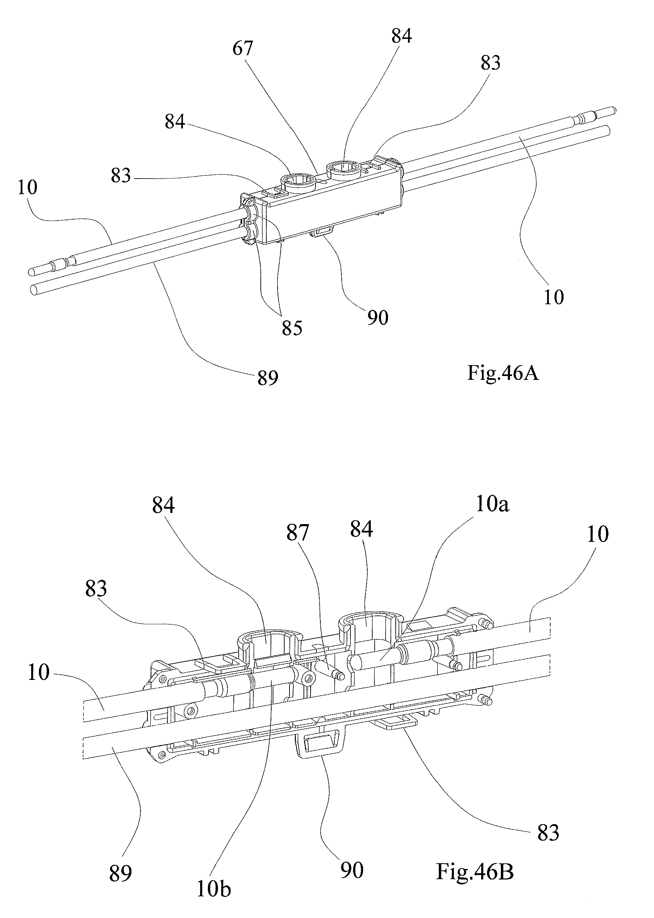

The main member 66 exhibits a suitable housing seating, U-shaped, and superiorly open substantially along the whole development of the member 66 such as to receive a support element 67 shown in figure 31 or 46 in its entirety.

The main member 66 also has an upper surface 80 positioned laterally with respect to the housing seating 68, which bears the aforementioned transversal blocking seatings 70 destined to position, centre, receive and block the anchoring feet 30 exactly in the same way as previously described and not further detailed here (figures 30-33).

As can be seen, particularly from figures 31, 34, 46A and 46B, the support element 67, in accordance with the second embodiment, comprises a plurality of supports 82 for the conductors. In detail, each of the supports 82 for the conductors bears (at least) one of the conductor elements 10 in the form of a wire, for example circular-section copper wire, the ends 10a and 10b of which emerge from opposite surfaces along the development axis 86 of the conductor support 82 itself.

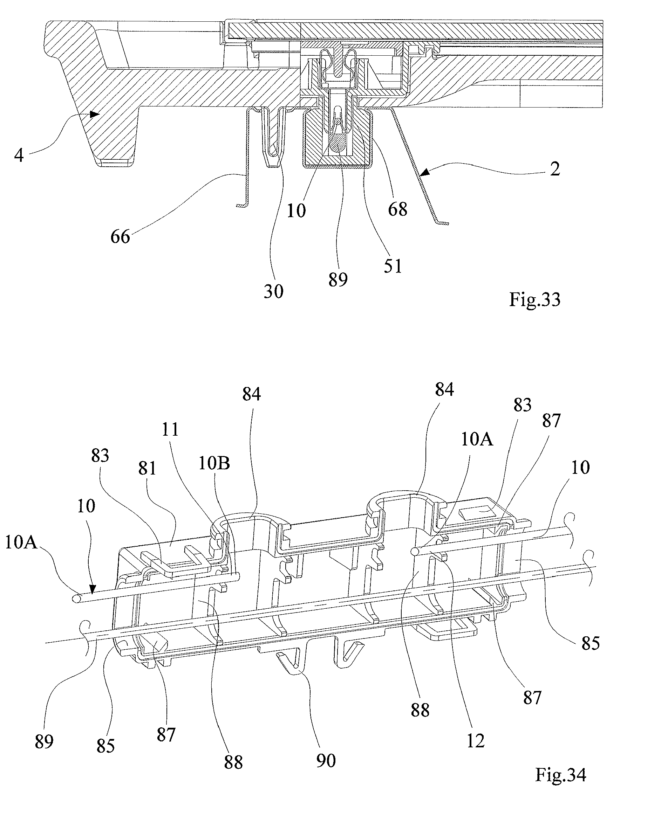

In an embodiment shown schematically in figures 31 and 34, the conductor support 82 comprises a main body made of an insulating material which covers the conductor element 10, with the exception of the ends 10a and 10b. Further, the conductor support 82 preferably incorporates an additional conductor element destined to define the return conductor 89 of the respective row of roof elements, as will be clarified in the following.

In figure 31 and also figure 34, the support element 67 also exhibits a box structure 81 which is designed to connect, at least mechanically (but also in general electrically), at least two supports 82 for the successive conductors.

In particular, the box structure 81 comprises two half-shells capable of being coupled together, one of which is shown in figure 34.

The two half-shells are, in particular, though not necessarily, identical in order to minimize moulding costs and logistics and present, directly realised on the surface thereof, coupling means 83 intended to facilitate the reciprocal engagement of the half-shells (in as generally reversible way), so as to define the box structure 81.

In particular, the coupling means 83 are illustrated, by way of example, in a U-shaped portion, destined to couple with a corresponding relief present on the surface of the opposite half-shell. Obviously other connecting systems are equally usable.

The U shaped portions will be present on each half-shell at an upper zone thereof and at a lower zone on opposite sides with respect to the prevalent development axis 86 and, correspondingly, reliefs will be present in the upper and lower position of each half-shell, also oppositely located with respect to the prevalent development axis 86.

Once the halves are coupled, the box structure 81 exhibits two respective accesses 84 configured such as to crossingly receive the electrical connecting element 51, such as to enable electrical connection with the conductor elements 10 (see also figure 33).

The accesses 84 will also be predisposed, respective coupling conditions to the roofing element 4, to ensure a watertight seal so as to prevent moisture or liquids (and dirt) from entering inside the box body 81.

The box structure 81 is also equipped with two opposite longitudinal accesses 85 along the development axis 86, through which the support ends 82 are inserted for the conductors successively arranged along the development axis.

For this purpose stop means 87 are present, for holding the connectors in position once they have been inserted within the longitudinal access 85, in particular preventing extraction.

In the illustrated embodiment the stop means 87 are defined by special shaped profiles with active portions arranged so as to enable insertion and to prevent extraction in the other direction.

In a further embodiment, shown schematically in figures 46A and 46B, the support element 67 is lacking such supports 82. In particular, the conductor elements 10 are held in place directly by the longitudinal accesses 85 which are configured to support and prevent contact between the conductor elements 10 engaged with the support element 67. In particular, the support element 67 is made of insulating material: the longitudinal accesses 85 are complementarily shaped to the conductor elements 10 and spaced from one another. In this condition the conductor elements 10 can for example be standard conductor wires which do not require the supports 82 and which are held in position directly by the longitudinal access 85.

In the above-described case, the stop means 87 are defined by appropriate profiles emerging transversally to the direction of the box structure and to the alignment direction of the conductors 10: the stop means are interposed between an end 10a of a conductor element 10 and an end 10b of a further conductor element arranged internally of a single support element 67.

Note however that the box structure 81 is also provided with at least an axial reference body 88 suitable for receiving the support wires 82 and determining a correct positioning relative to the box structure 81.

In particular, the axial reference body 88 is defined by appropriate emerging surfaces internally of the body cavity 81 such as to receive the front surface of the support conductors 82, in such a way that a respective end 10a, 10b of the conductor 10 is positioned correctly at the accesses 84. Obviously there will be two of these reference bodies 88, one for each support wire 82 coupled to the box body 81.

As previously described, the conductor elements 10 located at the top of the support element 67 which are configured such as to contact the contacts of the panels 6 are basically a flow line able to connect the photovoltaic panels in series.

Conversely the further conductor elements located inferiorly in use conditions in the supports 82 for the conductors will define, with the further electrical connecting element positioned internally of the box structure, a return line or conduit 89, electrically continuous, which can constitute the electrical return and enable the electric circuit to be closed.

Obviously the return conductor 89 will be isolated from the main conductor 10.

Finally, note that the box structure 82 also comprises a constraining and centring element 90 destined to cooperate with a corresponding seating 91 (see figure 30) of the main member 66.

In this way the correct relative axial positioning is guaranteed, as well as a possible removable constraint, of the box structure 81 to the main member 66, i.e. the connector element 2.

As previously mentioned, the connecting element 2 is directly engaged to the beams/ frame that form the roof. Alternatively, as shown in figure 35A, the roof structure 1 can include the auxiliary connection elements 2a which are arranged transversally, in particular perpendicularly, with respect to the connecting elements 2. These auxiliary connection elements 2a are configured such as to engage the beams/roof frame and are configured such as to engage said connecting elements 2. In particular, said auxiliary connection elements 2a may include seatings able to receive and constrain the connecting elements 2. These seatings are equidistanced along the development of the auxiliary connecting element such as to evenly space also the connecting elements 2.

Therefore the use of a connecting element 2 in accordance with the first or the second embodiment, which has a main section 66 and a support element 67, also as in the first or the second embodiment, guarantees the possibility to provide a quick and easy series connection of roof elements 4 arranged in rows.

In this way a series connection is provided along the alignment direction of the roofing elements 4 belonging to the same row 13, 14.

In still other words, each conductor element 10 establishes an electrical connection between the positive terminal 8 of a photovoltaic module 6 located on a roofing element 4 and the negative terminal 9 of a photovoltaic module 6 located on a covering element 4 arranged consecutively along the above-mentioned alignment direction 5.

In particular, all the conductor elements are arranged along the same development axis and the electrical connection scheme that is generated as a result of the coupling of each photovoltaic module connection element 2 is shown in figure 28.

Note however that the series connection is obtained using roof elements 4 that are identical to each other, particularly with reference to the positioning and conformation of the electrical connections. In this way no special arrangements are required during the assembly of the structure, as a simple mechanical connection and positioning of each covering element contemporaneously guarantees the correct positioning and the desired electrical connection of the various photovoltaic modules. This greatly simplifies the production procedures (a single modular element) as well as the transport, logistics and installation processes, thus reducing the overall cost of the entire structure. In fact, during installation the connecting elements will be arranged in parallel horizontally-arranged rows.

At this point the roofing elements are positioned one at a time, making sure that the anchoring feet 30 are received by the respective blocking seatings 70 and that, correspondingly, the electrical connecting elements 51 (i.e. the connecting portions to the conductors 63) are received in the respective passage seatings 69 defined on the main member 66.

The roofing elements 4 are automatically obtained, as well as the series connection of the photovoltaic modules 6.

At this point, for greater security, each element of a first row 13 of roofing elements is reversibly constrained to the overlapping and staggered element of an adjacent row 14, using the coupling means 21.

The potential difference of each row is then carried towards the lateral end of the roof after which it is conveyed, for example, to an inverter, and is directly placed in the electricity grid by means of known procedures which are not further detailed.

The invention thus provides important advantages.

First, a structure is realised which enables, during installation, guaranteeing a mechanical and electrical connection at the same time, also enabling a series connection of photovoltaic modules belonging to a same row of tiles. With the sole positioning of the roof structure 1 on the connecting element 2, a mechanical connection between anchoring portions 30 of the roofing element 4 and the connecting element 2 is simultaneously achieved. At the same time, an electrical connection between the photovoltaic panel 6 and the conductor element 10 is realised.

The entire roof structure can be reversibly demounted, thus allowing for easier replacement of any damaged modules and/or for maintenance thereof.

From an aesthetic point of view, the roof structure does not differ much from an ordinary roof made using tiles and is therefore acceptable in terms of environmental impact, including possibly in areas where normal photovoltaic panels cannot be used today.

The presence of an engaging frame of the photovoltaic modules protects the modules and ensures reversible engagement while not reducing the usable area for solar energy absorption.

Indeed, further protection elements, such as screens or the like, are absent; these would increase production costs and possibly reduce the performance of the photovoltaic modules, by reducing absorption of solar energy.

Furthermore, the special coupling system between the photovoltaic module and a roofing element ensures passive ventilation of the structure, thus preventing overheating.

Finally, the connecting element in the form of an extruded profiled member exhibits no particular problems in terms of production and /or installation.

## Claims

1. A cladding structure (1) for buildings, in particular houses, tower blocks and/or dwellings, comprising:
at least a connecting element (2) fixable to an infrastructure and having a prevalent development direction (3),
a plurality of covering elements (4), a predetermined number of which is positioned in an alignment direction (5), substantially coinciding with the prevalent development direction (3) of the connecting element (2),
at least a photovoltaic module (6) for each of the covering elements (4), each photovoltaic module (6) comprising two electrical connectors (7) exhibiting at ends thereof, in use conditions of the photovoltaic module (6), a potential difference, the connectors (7) respectively defining a positive pole (8) and a negative pole (9), the photovoltaic module (6) presenting a main development plane,
a plurality of conductor elements (10) borne by the connecting element (2) and establishing an electrical connection between the positive pole (8) of a photovoltaic module (6) positioned on a covering element (4) and a negative pole (9) of a photovoltaic module (6) positioned on a covering element (4) consecutively arranged in the alignment direction (5), thus establishing a series electrical connection between the elements,
anchoring means interposed between the connecting element (2) and the covering element (4) for mechanically fixing the covering element (4) to the connecting element (2) avoiding separation of the connecting element (2) and the covering element (4) in a direction contained in the main development plane of the photovoltaic module (6), said anchoring means defining a coupling direction from a disengaged position to an engaged position of the covering element (4) to the connecting element (2), the connectors (7) of the photovoltaic module (6) being configured to electrically engage the respective conductor elements (10) along an electrical coupling direction from an electrically disengaged position to an electrically engaged position, the anchoring means,
the connectors (7) and the conductor elements (10) being configured to move from along the electrical coupling direction from the electrically disengaged position to the electrically engaged position and along the coupling direction from the disengaged position to the engaged position of the covering element (4) to the connecting element (2) with the same movement.

2. The covering structure of claim 1, wherein the conducting elements (10) exhibit a first terminal end (10A) and a second terminal end (10B) distanced from and opposed to the first terminal end (10A), the first terminal end (10A) and the second terminal end (10B) being aligned in the prevalent development direction (3), being not covered by insulating material and configured to be directly engaged by the connectors (7) of the photovoltaic module (6).

3. The covering structure of claims 1 or 2, wherein each conducting element (10) is configured and positioned with respect to the connecting element (2) such as to determine a passage of electrical current between the positive pole (8) of a photovoltaic module (6) positioned on a covering element (4) and the negative pole (9) of a photovoltaic module (6) positioned on a covering element (4) immediately and consecutively arranged in the alignment direction (5), the passage of current taking place along a line having a direction which substantially coincides with the alignment direction (5) of the covering elements (4), a plurality of conducting elements (10) arranged on the connecting elements (2) are substantially aligned in the alignment direction (5) of the covering elements (4) and comprise elongate bodies consecutively arranged on the connecting elements (2) and aligned in the prevalent development direction (3).

4. The cladding structure of the preceding claim, wherein the terminal ends of the conducting element (10) exhibit at least a first portion of free external surface (11) made of a conducting material and destined to establish an electrical connection with the connector of the photovoltaic module (6) which defines the positive pole (8), at least a second portion of free external surface (12) made of a conducting material and destined to establish an electrical connection with the connector which defines the negative pole (9) of the photovoltaic module (6) aligned in the prevalent development direction (3).

5. The cladding structure of any one of the preceding claims, wherein the connecting element (2) comprises at least a main profiled member (66) and at least a support element (67) destined to support a predetermined number of conducting elements (10) and coupled to a housing seating (68) of the main profiled member (66), the main profiled member (66) exhibiting at least a housing seating (68) which extends along the prevalent development direction (3), the support element (67) comprising a box structure (81) destined to connect, at least mechanically, at least two consecutive conducting elements (10), the box structure (81) exhibiting two respective accesses (84) configured such as to receive electrical connecting element (51) of the connectors (7) of the photovoltaic module (6) and to enable the electrical connection thereof with the conducting elements (10), in particular the box structure (81) comprising two longitudinal accesses (85) reciprocally opposite along a development axis (86) of the box structure, conducting elements (10)arranged subsequently along the development axis (86) being engaged by respective longitudinal accesses (85).

6. The structure of claim 5, wherein the box structure (81) comprises at least an axial reference body (88) destined to abuttingly receive the conducting elements (10) and to determine a correct reciprocal positioning of the conducting elements (10), the box structure (81) for example comprising a constraining and centring element (90) destined to cooperate with a corresponding seating (91) of the main profiled member (66).

7. The cladding structure of any one of the preceding claims, wherein each of the covering elements (4) lies in a prevalent development plane (15) and comprises an upper portion (16) and a lower portion (17) opposite the upper portion (16) with respect to the prevalent development plane (15), the upper portion (16) comprises a housing seating (18) destined to be engaged to the photovoltaic module (6), the upper portion (16) comprising a plurality of rest elements (19) emerging from the upper portion (16) which develop transversally with respect to the prevalent development plane (15), the rest elements (19) providing a support for the photovoltaic module (6), and maintaining the photovoltaic module (6) distanced from the upper portion (16) and enabling, in use conditions, passage of at least a fluid between the photovoltaic module (6) and the upper portion (16).

8. The cladding structure of any one of the preceding claims, wherein the covering element (4) comprises a housing cavity (27) exhibiting at least a main access opening located at the upper portion (16), the housing cavity (27) extending transversally with respect to the prevalent development plane (15) of the covering element (4) and being destined to receive passage of the electrical connection between the photovoltaic module (6) and the connecting element (2), the housing cavity (17) comprising a base (128) opposite the main access opening, and at least a containing box (129) which optionally exhibits a coupling element (130) at the main access opening and wherein the covering elements (4) exhibit at least a through-seating (29) which extends from the upper portion (16) to the lower portion (17) of the covering element (4), the through-seating (29) being destined, in use conditions, for passage of the electrical connections between the photovoltaic module (6) and the connecting element (2), and the through-seating (29) being positioned in proximity of the base (128) internally of the housing cavity (27) in order to enable a connection with the conducting element (10) arranged on the connecting element (2).

9. The cladding structure of any one of the preceding claims, wherein the anchoring means exhibit at least an anchoring foot (30) emerging from a lower portion (17) of the covering element (4) and being destined for coupling of the covering element (4) with the connecting element (2), the anchoring means further comprising a corresponding seat (70) in the connecting element (2) for receiving the anchoring foot (30), alternatively the anchoring means exhibiting at least an anchoring foot (30) emerging from the connecting element (2) and being destined for coupling of the covering element (4) with the connecting element (2), the anchoring means further comprising a corresponding seat (70) in the covering element (4) for receiving the anchoring foot (30), in particular the cladding structure (1) comprising at least an elastic element (31) interposed between the covering element (4) and the connecting element (2) in order to enable a reversible coupling there-between, in particular the elastic element (31) being arranged on the anchoring element (30), the elastic element (31) optionally exhibiting at least a fixing portion (32) and at least an anchoring
portion (33) destined respectively to enable connection with the anchoring foot (30) and to enable reversible coupling with the connecting element (2).

10. The cladding structure of any one of the preceding claims, comprising at least two electrical connections (51) and at least a containing body (52) exhibiting an open box structure comprising at least a housing base (53) and a perimeter coupling portion (54) destined to engage with a complementarily-shaped rest element (19) of the covering element (4), the electrical connecting elements (51) being positioned internally of the body (52) and enabling electrical connection between the photovoltaic module (6) and the connecting element (2), at least an electrical connecting element (51) being connected to the connector (7) defining the positive pole (8), enabling an electrical connection with the conducting element (10) of the connecting element (2), the other electrical connecting element (51) being connected to the connector (7) defining the negative pole (9) of a further photovoltaic module (6) consecutively aligned to a preceding photovoltaic module (6), the electrical connecting element (51) comprising at least a first electrical coupling portion (62) configured such as to enable passage of electrical current with a pole of the photovoltaic module (6) and at least a second portion of electrical connection (63) destined to couple reversibly with the conducting element (10).

11. The cladding structure of claim 10, wherein the containing body (52) comprises at least a transpiring membrane (64) which enables unidirectional fluid passage through the body (52), in particular enabling exit of moisture therefrom, the body (52) comprising at least a passage hole (65) which connects an outside environment with an internal environment, the transpiring membrane (64) being engaged to the passage hole (65), the passage hole (65) in particular being situated on the housing base (53) of the body (52), the transpiring membrane (64) optionally comprising at least a polytetrafluoroethylene (PTFE) layer and being made, for example, of Goretex.

12. A cladding structure (1) of anyone of the previous claims wherein the coupling direction from the disengaged position to the engaged position of the covering element (4) to the connecting element (2) and the electrical coupling direction from the electrically disengaged position to the electrically engaged position are both transversal to the main development plane of the photovoltaic module (6) and substantially parallel one another.

13. A cladding structure (1) of anyone of the previous claims wherein the anchoring means are different and optionally separated from the connectors (7) and the conductor elements (10).

14. A cladding structure (1) of anyone of the previous claims wherein the connecting element (2) does not comprise any electrical female connector emerging from a section bar of the connecting element itself.

15. A cladding structure (1) of anyone of the previous claims wherein the anchoring means comprise elastic elements (31) to prevent extraction of the covering element (4) from the connecting element (2) along the coupling direction from the engaged position to the disengaged position of the covering element (4) and the connecting element (2).
